# EUROPEAN PATENT APPLICATION

(11) **EP 4 832 572 A1**
(43) Date of publication of application: **28.10.2026**
(21) Application number: 24838304.4
(22) Date of filing: 29.02.2024
(51) Int. Cl.: H04W 36/00

(54) **HANDOVER METHOD, COMMUNICATION DEVICE AND STORAGE MEDIUM**

(30) Priority: 18.01.2024 WO PCT/CN2024/073086
(71) Applicant: Shenzhen Transsion Holdings Co., Ltd., Shenzhen, Guangdong 518057 (CN)
(72) Inventor: HUANG, Chiunwei, Shenzhen, Guangdong 518057 (CN); XIE, Yili, Shenzhen, Guangdong 518057 (CN); HUANG, Wei, Shenzhen, Guangdong 518057 (CN)
(74) Representative: Barker Brettell LLP
(86) International application number: PCT/CN2024/079427
(87) International publication number: WO 2025/011043

(57) **Abstract**

In the technical solution of the present application, by performing a secondary node LTM handover based on interaction signaling between a master node and a secondary node, an LTM handover mechanism is refined, such that an LTM handover scheme not only supports continuous handovers under an intra-central unit, but also supports an inter-central unit handover, thereby improving the applicability and/or diversity of LTM handovers.

## Description

### RELATED APPLICATIONS

The present application claims priority to PCT Patent Application No. PCT/CN2024/073086, filed with the World Intellectual Property Organization on January 18, 2024, and entitled "HANDOVER METHOD, COMMUNICATION DEVICE AND STORAGE MEDIUM", a part of which is incorporated herein by reference.

### TECHNICAL FIELD

The present application relates to the field of communication technologies, and in particular, to a handover method, a communication device, and a storage medium.

### BACKGROUND

In existing protocols, a handover scheme for LTM (L1/L2 Triggered Mobility, L1/L2 triggered mobility) includes: reporting a measurement report by a terminal device, and notifying, after a network device (for example, a master node or a secondary node) determines to perform a handover, the terminal device to perform an LTM handover.

However, during the conception and implementation of the present application, the inventors have found that there are at least the following problems: the existing LTM handover scheme supports only continuous handovers under an intra-CU (Intra-CU, Intra-Central Unit), and does not support inter-CU (Inter-CU, Inter-Central Unit) handovers. In other words, there is a lack of a defined inter-CU handover mechanism.

The foregoing description is to provide general background information, and does not necessarily constitute the prior art.

### TECHNICAL SOLUTIONS

The main purpose of the present application is to provide a handover method, a communication device, and a storage medium, to refine an LTM handover mechanism, thereby improving the applicability and/or diversity of LTM handovers.

A handover method provided by the present application can be applied to at least one secondary node. The method includes the following step:
S2: performing a secondary node LTM handover based on interaction signaling between a master node and the secondary node.

Optionally, the interaction signaling between the master node and the secondary node includes at least one of secondary node change request signaling, secondary node change request acknowledge signaling, secondary node change required signaling, secondary node change required confirm signaling, and secondary node LTM required confirm signaling.

Optionally, the method further includes at least one of the following:
transmitting the secondary node change required signaling to the master node;
receiving the secondary node change request signaling transmitted by the master node;
transmitting the secondary node change request acknowledge signaling to the master node;
receiving the secondary node change required confirm signaling and/or the secondary node LTM required confirm signaling;
transmitting downlink control information to a terminal device;
receiving timing advance information and/or a secondary node identifier transmitted by the master node;
transmitting cell switch notification signaling to the master node; and
transmitting a cell switch command to the terminal device.

Optionally, the method further includes at least one of the following:
the at least one secondary node includes a source secondary node and/or a candidate secondary node;
the secondary node change required signaling is used for initiating secondary node LTM configuration information;
the secondary node change required signaling carries at least one of a random access configuration, a TCI state configuration, a channel state indication configuration, a radio resource control configuration, and a layer-1 measurement event;
the secondary node change request signaling is used for providing a candidate secondary node LTM configuration;
the secondary node change request signaling carries at least one of a candidate cell identifier, a candidate cell LTM configuration identifier, an LTM configuration identifier mapping list, a channel state indication request resource configuration, a central unit identifier indication, a central unit identifier, and a central unit identifier mapping list;
the secondary node change request signaling includes at least one of a secondary node addition request, a secondary node modification request, a secondary node release request, and a secondary node LTM request;
the secondary node change request acknowledge signaling includes at least one of a secondary node addition request acknowledgment, a secondary node modification request acknowledgment, a secondary node release request acknowledgment, and a secondary node LTM request acknowledgment;
the secondary node change request acknowledge signaling carries updated secondary node LTM configuration information;
the secondary node change required confirm signaling and/or the secondary node LTM required confirm signaling are/is used for determining completion of secondary node LTM configuration;
the downlink control information is used for triggering the terminal device to perform early uplink synchronization with the candidate secondary node;
the timing advance information is carried in master node-secondary node timing advance information transfer signaling and/or inter-base station timing advance information transfer signaling;
the cell switch notification signaling is used for notifying the master node to perform a secondary cell group handover; and
the cell switch notification signaling is carried in secondary node-master node cell switch notification signaling.

Optionally, the method further includes at least one of the following:
the radio resource control configuration includes the central unit identifier and/or a candidate cell configuration;
the secondary node change required signaling and/or secondary node LTM request acknowledge signaling carry/carries the central unit identifier;
the candidate secondary node LTM configuration includes at least one of the random access configuration, the TCI state configuration, the channel state indication configuration, the radio resource control configuration, the layer-1 measurement event, and a channel state indication report configuration;
the updated secondary node LTM configuration information includes at least one of the random access configuration, the TCI state configuration, the channel state indication configuration, the radio resource control configuration, the layer-1 measurement event, and the channel state indication report configuration;
the master node-secondary node timing advance information transfer signaling further carries secondary node identity information;
the candidate secondary node is an inter-central unit secondary node;
the central unit identifier indication is used for requesting for an indication of a central unit identifier corresponding to the candidate secondary node;
the central unit identifier and/or the central unit identifier mapping list are/is used for providing the central unit identifier corresponding to the candidate secondary node; and
the central unit identifier includes a serving cell central unit identifier and/or a candidate cell central unit identifier.

A handover method further provided by the present application can be applied to a master node. The method includes the following step:
S1: performing a secondary node LTM handover based on interaction signaling between the master node and a secondary node.

Optionally, the interaction signaling between the master node and the secondary node includes at least one of secondary node change request signaling, secondary node change request acknowledge signaling, secondary node change required signaling, secondary node change required confirm signaling, and secondary node LTM required confirm signaling.

Optionally, the method further includes at least one of the following:
receiving the secondary node change required signaling transmitted by a source secondary node;
transmitting the secondary node change request signaling to at least one secondary node;
receiving the secondary node change request acknowledge signaling;
transmitting the secondary node change required confirm signaling and/or secondary node LTM request confirm signaling to the at least one secondary node;
receiving timing advance information and/or a secondary node identifier transmitted by a candidate secondary node;
forwarding the timing advance information and/or the secondary node identifier to the source secondary node;
receiving cell switch notification signaling transmitted by the source secondary node;
receiving radio resource reconfiguration complete signaling and/or first uplink data transmitted by a terminal device; and
forwarding the radio resource reconfiguration complete signaling and/or the first uplink data to a target secondary node in the candidate secondary node.

Optionally, the method further includes at least one of the following:
the at least one secondary node includes a source secondary node and/or a candidate secondary node;
the secondary node change required signaling is used for requesting for the secondary node LTM configuration information;
the secondary node change required signaling carries at least one of a random access configuration, a TCI state configuration, a channel state indication configuration, a radio resource control configuration, and a layer-1 measurement event;
transmitting the secondary node change request signaling to at least one candidate secondary node;
the secondary node change request signaling is used for requesting for a candidate secondary node LTM configuration;
the secondary node change request signaling carries at least one of a candidate cell identifier, a candidate cell LTM configuration identifier, an LTM configuration identifier mapping list, a channel state indication request resource configuration, a central unit identifier indication, a central unit identifier, and a central unit identifier mapping list;
the secondary node change request signaling includes at least one of a secondary node addition request, a secondary node modification request, a secondary node release request, and a secondary node LTM request;
the secondary node change request acknowledge signaling includes at least one of a secondary node addition request acknowledgment, a secondary node modification request acknowledgment, a secondary node release request acknowledgment, and a secondary node LTM request acknowledgment;
the secondary node change request acknowledge signaling is used for providing the candidate secondary node LTM configuration;
the secondary node change required confirm signaling and/or the secondary node LTM required confirm signaling are/is used for determining completion of secondary node LTM configuration;
the timing advance information is carried in master node-secondary node timing advance information transfer signaling and/or inter-base station timing advance information transfer signaling;
the cell switch notification signaling is used for notifying the master node to perform a secondary cell group handover;
the cell switch notification signaling is carried in secondary node-master node cell switch notification signaling; and
completion of the handover is determined by the target secondary node based on the cell switch notification signaling and/or the radio resource reconfiguration complete signaling.

Optionally, the method further includes at least one of the following:
the radio resource control configuration includes the central unit identifier and/or a candidate cell configuration;
the secondary node change required signaling and/or secondary node LTM request acknowledge signaling carry/carries the central unit identifier;
the central unit identifier indication is used for requesting for an indication of a central unit identifier corresponding to the candidate secondary node;
the central unit identifier and/or the central unit identifier mapping list are/is used for providing a secondary node central unit identifier;
the candidate secondary node LTM configuration includes at least one of the random access configuration, the TCI state configuration, the channel state indication configuration, the radio resource control configuration, the layer-1 measurement event, and a channel state indication report configuration;
the central unit identifier includes a serving cell central unit identifier and/or a candidate cell central unit identifier;
the master node-secondary node timing advance information transfer signaling further carries secondary node identity information; and
the candidate secondary node is an inter-central unit secondary node.

A handover method further provided by the present application can be applied to a terminal device (for example, a mobile phone). The method includes the following step:
S3: performing an LTM handover based on a cell switch command, where the cell switch command is determined by a secondary node based on interaction signaling between a master node and the secondary node.

Optionally, the interaction signaling between the master node and the secondary node includes at least one of secondary node change request signaling, secondary node change request acknowledge signaling, secondary node change required signaling, secondary node change required confirm signaling, and secondary node LTM required confirm signaling.

Optionally, step S3 includes at least one of the following:
the secondary node change required signaling is transmitted from a source secondary node to the master node;
the secondary node change request signaling is transmitted from the master node to the source secondary node and/or a candidate secondary node;
the secondary node change request acknowledge signaling is transmitted from the candidate secondary node to the master node;
receiving radio resource control reconfiguration signaling transmitted by the master node;
transmitting radio resource control reconfiguration complete signaling to the master node;
the secondary node change required confirm signaling and/or secondary node LTM request confirm signaling is transmitted from the master node to the source secondary node based on the radio resource control reconfiguration complete signaling;
performing candidate cell early downlink synchronization based on secondary node LTM configuration information in the radio resource control reconfiguration signaling;
receiving downlink control information transmitted by the source secondary node;
transmitting a random access preamble based on the downlink control information;
cell switch notification signaling is transmitted from the source secondary node to the master node;
transmitting first uplink data to the master node based on timing advance information carried in the cell switch command;
transmitting the radio resource reconfiguration complete signaling and/or the first uplink data to the master node; and
the radio resource reconfiguration complete signaling and/or the first uplink data is transmitted from the master node to a target secondary node in the candidate secondary node.

Optionally, the method further includes at least one of the following:
the secondary node change required signaling is used for requesting for the secondary node LTM configuration information;
the secondary node change required signaling carries at least one of a random access configuration, a TCI state configuration, a channel state indication configuration, a radio resource control configuration, and a layer-1 measurement event;
the secondary node change request signaling is transmitted by the master node;
the secondary node change request signaling is used for initiating a secondary node change request procedure;
the secondary node change request signaling is used for requesting for at least one candidate cell configuration in the target secondary node;
the secondary node change request signaling carries at least one of a target candidate cell identifier, a candidate cell LTM configuration identifier, an LTM configuration identifier mapping list, a channel state indication request resource configuration, a central unit identifier indication, a central unit identifier, and a central unit identifier mapping list;
the secondary node change request signaling includes at least one of a secondary node addition request, a secondary node modification request, a secondary node release request, and a secondary node LTM request;
the secondary node change request acknowledge signaling includes at least one of a secondary node addition request acknowledgment, a secondary node modification request acknowledgment, a secondary node release request acknowledgment, and a secondary node LTM request acknowledgment;
the secondary node change request acknowledge signaling is used for carrying feedback signaling;
the secondary node change request acknowledge signaling is used for providing the at least one candidate cell configuration in the target secondary node;
the secondary node change required confirm signaling and/or the secondary node LTM request confirm signaling are/is used for determining completion of radio resource control reconfiguration;
the timing advance information is transmitted by the candidate secondary node to the master node;
the timing advance information is forwarded by the master node to the source secondary node;
the timing advance information is carried in master node-secondary node timing advance information transfer signaling and/or inter-base station timing advance information transfer signaling;
the cell switch notification signaling is used for notifying the master node to perform a secondary cell group handover;
the cell switch notification signaling is carried in secondary node-master node cell switch notification signaling;
the target secondary node is determined based on the cell switch notification signaling and/or the radio resource reconfiguration complete signaling;
the random access preamble is used for triggering a target candidate cell to calculate the timing advance information; and
the candidate secondary node is an inter-central unit secondary node.

The present application further provides a communication device, including: a memory, a processor, and a handover program stored on the memory and executable on the processor, and when the handover program is executed by the processor, the step of any of the foregoing handover methods is implemented.

The communication device according to the present application may be a terminal device (for example, a mobile phone), or may be a network device (for example, a master node or a secondary node). The specific case needs to be defined based on context.

The present application further provides a storage medium. The storage medium stores a computer program, and when the computer program is executed by a processor, the step of any of the foregoing handover methods is implemented.

In the technical solution of the present application, by performing a secondary node LTM handover based on interaction signaling between a master node and a secondary node, an LTM handover mechanism is refined, such that an LTM handover scheme not only supports continuous handovers under an intra-central unit, but also supports an inter-central unit handover, thereby improving the applicability and/or diversity of LTM handovers.

### BRIEF DESCRIPTION OF THE DRAWINGS

The accompanying drawings herein are incorporated in the description as a part of this specification, illustrate embodiments of the present application, and are used to describe the principle of the present application together with the description. To describe a technical solution in the embodiments of the present application more clearly, the following briefly describes the accompanying drawings for describing the embodiments. Clearly, those of ordinary skills in the art may still derive other drawings from these accompanying drawings without creative efforts.
FIG. 1 is a schematic diagram of a hardware structure of a mobile terminal for implementing various embodiments of the present application.
FIG. 2 is a diagram of an architecture of a communication network system according to an embodiment of the present application.
FIG. 3 is a schematic diagram of a hardware structure of a controller 140 according to the present application.
FIG. 4 is a schematic diagram of a hardware structure of a network node 150 according to the present application.
FIG. 5 is a schematic flowchart of a handover method according to embodiment 1.
FIG. 6 is an interaction timing schematic diagram according to embodiment 2.
FIG. 7 is an interaction timing schematic diagram according to embodiment 8.
FIG. 8 is a schematic flowchart of a handover method according to embodiment 12.
FIG. 9 is a first schematic diagram of a structure of a handover apparatus according to an embodiment of the present application.
FIG. 10 is a second schematic diagram of a structure of a handover apparatus according to an embodiment of the present application.
FIG. 11 is a third schematic diagram of a structure of a handover apparatus according to an embodiment of the present application.
FIG. 12 is a schematic diagram of a structure of a communication device according to an embodiment of the present application.

The realization of the purposes, functional features, and advantages of the present application are further described with reference to the accompanying drawings in conjunction with the embodiments. The foregoing figures have illustrated defined embodiments of the present application that are described in more detail below. These figures and text descriptions are not intended to limit the scope of the concept of the present application in any manner, but rather to explain the concept of the present application to those skilled in the art by reference to specific embodiments.

### THE EMBODIMENTS OF THE APPLICATION

Example embodiments are described in detail herein, and examples are shown in the accompanying drawings. When descriptions below are related to an accompanying drawing, unless otherwise stated, a same number in different accompanying drawings indicates a same or similar element. Implementations described in exemplary embodiments below do not represent all implementations complying with the present application. Contradictorily, the implementations are merely examples of an apparatus and a method that are described in detail in the claims and are consistent with some aspects of the present application.

It should be noted that, in this specification, the terms "include", "comprise", or any other variant thereof are intended to cover a non-exclusive inclusion, so that a process, a method, an article, or an apparatus that includes a list of elements not only includes those elements but also includes other elements which are not expressly listed, or further includes elements inherent to such a process, method, article, or apparatus. An element limited by "include/comprise a..." does not, without more constraints, preclude the presence of additional identical elements in the process, method, article, or apparatus that includes the element; and/or components, features, or elements having same names in different embodiments of the present application may have the same meaning, or may have different meanings, and a specific meaning thereof should be determined based on the interpretation in a specific embodiment or further in conjunction with the context of a specific embodiment.

It should be understood that in this specification, although "first", "second", "third", and the like may be used to describe various information, the information is not limited to the terms. The terms are merely used to differentiate a same type of information. For example, without departing from the scope of this specification, first information may alternatively be referred to as second information, and similarly, second information may alternatively be referred to as first information. Depending on the context, "if" used in this specification, for example, may be construed as "when", "in a case in which", or "in response to determining". Further, as used in this specification, "a", "an", and "the" used with a singular form also imply and include a plural form, unless an opposite indication is clearly stated in the context. It should further be understood that the terms "include/comprise" and/or "contain" indicate that a mentioned feature, step, operation, element, assembly, item, and/or group exists, but it is not excluded that one or more other features, steps, operations, elements, assemblies, items, and/or groups may exist, appear, or be added. The terms "or," "and/or," "include/comprise at least one of the following:", and the like used in the present application may be construed as inclusive, or as meaning any one or any combination. For example, "include/comprise at least one of the following: A, B, and C" means "any of the following: A; B; C; A and B; A and C; B and C; and A, B, and C." In another example, "A, B, or C" or "A, B, and/or C" means "any of the following: A; B; C; A and B; A and C; B and C; and A, B, and C." Exceptions to this definition occur only when a combination of the elements, functions, steps, or operations is inherently mutually exclusive in some manner.

It should be understood that, although the steps in the flowcharts of the embodiments of the present application are shown sequentially as indicated by arrows, these steps are not necessarily performed sequentially in an order indicated by the arrows. Unless clearly stated otherwise herein, there is no strict restriction on an order of the execution of these steps, and the steps may be performed in another order. Moreover, at least some of the steps in the figures may include a plurality of sub-steps or a plurality of stages, and these sub-steps or stages are not necessarily performed and completed at the same time, but may be performed at different times. An execution order thereof is not necessarily sequential either, but the steps or stages may be performed in turn or alternately with at least some of other steps or sub-steps or stages of other steps.

Depending on the context, "if" used in this specification, for example, may be construed as "when", "in a case in which", "in response to determining", or "in response to detecting". Similarly, depending on the context, the phrase "if it is determined that" or "if it (the stated condition or event) is detected" may be construed as "when it is determined that", "in response to determining", "when it (the stated condition or event) is detected", or "in response to detecting (the stated condition or event)".

It should be noted that, in this specification, step designations such as S1, S2, and the like are used for the purpose of expressing the corresponding content more clearly and concisely, and do not constitute a substantial limitation on an order. In specific implementations, those skilled in the art may perform S2 before S1, or the like, but all such variations shall fall within the protection scope of the present application.

It should be understood that the specific embodiments described here are merely intended to explain the present application, but are not intended to limit the present application.

In the following descriptions, suffixes such as "module", "component", or "unit" used to denote elements are merely for the convenience of describing the present application, and have no specific meaning per se. Therefore, "module", "component", and "unit" may be used interchangeably.

The communication device according to the present application may be a terminal device (for example, a mobile phone), or may be a network device (for example, a master node or a secondary node). The specific case needs to be defined based on context.

The terminal device may be implemented in various forms. For example, the terminal device described in the present application may include smart terminal devices such as a mobile phone, a tablet computer, a laptop computer, a palmtop computer, a personal digital assistant (Personal Digital Assistant, PDA), a portable media player (Portable Media Player, PMP), a navigation apparatus, a wearable device, a smart bracelet, a pedometer, and the like, as well as fixed terminal devices such as a digital TV, a desktop computer, and the like.

In the following descriptions, a mobile terminal is used as an example for illustration. Those skilled in the art will understand that, besides elements specifically intended for mobile purposes, a configuration according to the implementations of the present application can also be applied to a fixed-type terminal device.

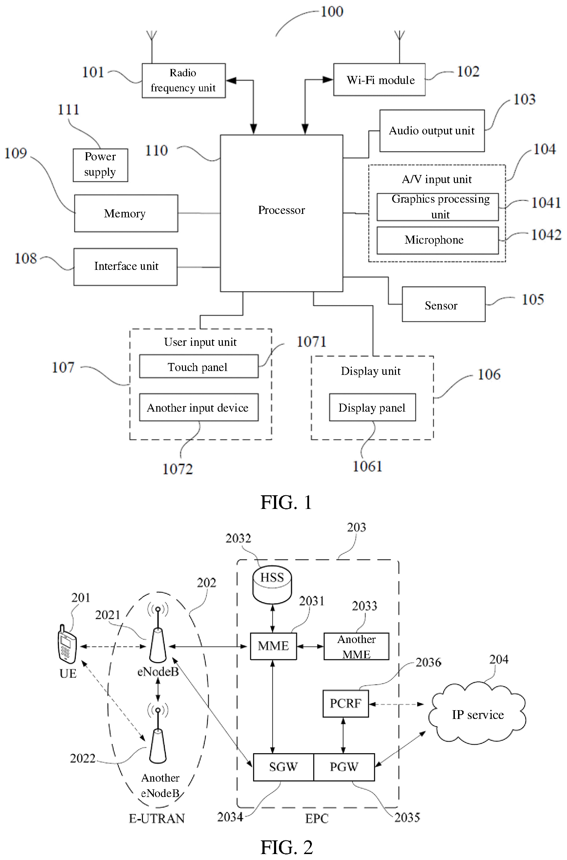

FIG. 1 is a schematic diagram of a hardware structure of a mobile terminal for implementing various embodiments of the present application. The mobile terminal 100 may include: an RF (Radio Frequency, radio frequency) unit 101, a Wi-Fi module 102, an audio output unit 103, an A/V (audio/video) input unit 104, a sensor 105, a display unit 106, a user input unit 107, an interface unit 108, a memory 109, a processor 110, a power supply 111, and other components. Those skilled in the art can understand that the structure of the mobile terminal shown in FIG. 1 does not constitute a limitation on the mobile terminal. The mobile terminal may include more or fewer components than those shown in the figure, or combine some components, or have different component arrangements.

The components of the mobile terminal are introduced below in detail in conjunction with FIG. 1.

The radio frequency unit 101 may be configured to receive and transmit signals during information receiving and transmitting or a call. Specifically, the radio frequency unit receives downlink information from a base station, and transmits the information to the processor 110 for processing; and transmits uplink data to the base station. Usually, the radio frequency unit 101 includes, but is not limited to, an antenna, at least one amplifier, a transceiver, a coupler, a low noise amplifier, a duplexer, and the like. In addition/alternatively, the radio frequency unit 101 may communicate with a network and another device through wireless communication. The wireless communication may adopt any communication standard or protocol, including, but not limited to, GSM (Global System of Mobile Communication, global system of mobile communication), GPRS (General Packet Radio Service, general packet radio service), CDMA2000 (Code Division Multiple Access 2000, code division multiple access 2000), WCDMA (Wideband Code Division Multiple Access, wideband code division multiple access), TD-SCDMA (Time Division-Synchronous Code Division Multiple Access, time division-synchronous code division multiple access), FDD-LTE (Frequency Division Duplexing-Long Term Evolution, frequency division duplexing-long term evolution), TDD-LTE (Time Division Duplexing-Long Term Evolution, time division duplexing-long term evolution), 5G NR (New Radio), and 6G, etc.

Wi-Fi is a short-range wireless transmission technology. The mobile terminal can help users to transmit and receive emails, browse web pages, access streaming media, and so on, by using the Wi-Fi module 102, providing users with wireless broadband Internet access. Although the Wi-Fi module 102 is shown in FIG. 1, it can be understood that the module is not an essential component of the mobile terminal, and may be omitted as needed without departing from the essence of the present invention.

When the mobile terminal 100 is in a call signal receiving mode, a call mode, a recording mode, a voice recognition mode, a broadcast receiving mode, or another mode, the audio output unit 103 may convert audio data received by the radio frequency unit 101 or the Wi-Fi module 102 or stored on the memory 109 into audio signals and output the signals as sound. In addition, the audio output unit 103 may further provide audio output (for example, a call signal receiving sound or a message receiving sound) related to a specific function performed by the mobile terminal 100. The audio output unit 103 may include a loudspeaker, a buzzer, and the like.

The A/V input unit 104 is configured to receive an audio signal or a video signal. The A/V input unit 104 may include a graphics processing unit (Graphics Processing Unit, GPU) 1041 and a microphone 1042. The graphics processing unit 1041 processes image data of a static image or video obtained by an image capture apparatus (for example, a camera) in a video capture mode or an image capture mode. A processed image frame may be displayed on the display unit 106. The image frame processed by the graphics processing unit 1041 may be stored on the memory 109 (or another storage medium) or transmitted by using the radio frequency unit 101 or the Wi-Fi module 102. The microphone 1042 may receive sound (audio data) in operating modes such as a telephone call mode, a recording mode, a voice recognition mode, and the like, and can process such sound into audio data. The processed audio (voice) data may be converted in a call mode into a format that can be transmitted by the radio frequency unit 101 to a mobile communication base station for outputting. The microphone 1042 may implement various types of noise cancellation (or suppression) algorithm to cancel (or suppress) noise or interference generated during the reception and transmission of an audio signal.

The mobile terminal 100 may further include at least one sensor 105, for example, an optical sensor, a motion sensor, and another sensor. Optionally, the optical sensor includes an ambient light sensor and a proximity sensor. Optionally, the ambient light sensor may adjust luminance of a display panel 1061 based on brightness of ambient light, and the proximity sensor may disable the display panel 1061 and/or backlight when the mobile terminal 100 approaches an ear. As a motion sensor, an accelerometer sensor can detect magnitude of accelerations in various directions (usually in three axes), can detect magnitude and the direction of gravity when stationary, may be configured to identify applications of postures of a mobile phone (for example, switching between a landscape mode and a portrait mode, related games, and magnetometer posture calibration), may perform functions related to vibration identification (for example, a pedometer or a knock), and so on. For other sensors such as a fingerprint sensor, a pressure sensor, an iris sensor, a molecular sensor, a gyroscope, a barometer, a hygrometer, a thermometer, and an infrared sensor that may be configured on the mobile phone, details are not described herein again.

The display unit 106 is configured to display information input by a user or information provided for a user. The display unit 106 may include the display panel 1061. The display panel 1061 may be configured in a form of a liquid crystal display (Liquid Crystal Display, LCD), an organic light-emitting diode (Organic Light-Emitting Diode, OLED), or the like.

The user input unit 107 may be configured to: receive input digit or character information, and generate a key signal input related to user settings and function control of the mobile terminal. Optionally, the user input unit 107 may include a touch panel 1071 and another input device 1072. The touch panel 1071 is also referred to as a touchscreen, and can collect a touch operation performed by a user on or near the touch panel 1071 (for example, an operation performed by a user on the touch panel 1071 or near the touch panel 1071 by using any proper object or accessory, for example, a finger or a stylus), and drive a corresponding connection apparatus based on a prespecified program. The touch panel 1071 may include two parts: a touch detection apparatus and a touch controller. Optionally, the touch detection apparatus detects a touch location of a user, detects a signal brought by a touch operation, and transmits the signal to the touch controller. The touch controller receives touch information from the touch detection apparatus, converts the touch information into contact coordinates, transmits the contact coordinates to the processor 110, and can receive and execute a command from the processor 110. In addition/alternatively, the touch panel 1071 may be implemented in various types such as a resistor, a capacitor, an infrared ray, or a surface acoustic wave. The user input unit 107 may include another input device 1072 in addition to the touch panel 1071. Optionally, the another input device 1072 may include, but is not limited to, one or more of a physical keyboard, a function key (for example, a volume control key or a switch key), a trackball, a mouse, a joystick, and the like. This is not specifically limited herein.

Optionally, the touch panel 1071 may cover the display panel 1061. When detecting a touch operation on or near the touch panel 1071, the touch panel 1071 transmits the touch operation to the processor 110 to determine a touch event type. Then, the processor 110 provides a corresponding visual output on the display panel 1061 based on the touch event type. In FIG. 1, the touch panel 1071 and the display panel 1061 are used as two independent components to implement input and output functions of the mobile terminal. However, in some embodiments, the touch panel 1071 and the display panel 1061 may be integrated to implement the input and output functions of the mobile terminal. This is not specifically limited herein.

The interface unit 108 is used as an interface that can be passed through for connecting at least one external apparatus to the mobile terminal 100. For example, the external apparatus may include a wired or wireless headset jack, an external power supply (or a battery charger) port, a wired or wireless data port, a storage card port, a port for connecting an apparatus having an identification module, an audio input/output (I/O) port, a video I/O port, a headset jack, or the like. The interface unit 108 may be configured to: receive input (for example, data information and power) from an external apparatus, and transmit the received input to one or more elements inside the mobile terminal 100; or may be configured to transmit data between the mobile terminal 100 and the external apparatus.

The memory 109 may be configured to store a software program and various data. The memory 109 may mainly include a program storage area and a data storage area. Optionally, the program storage area may store an operating system, an application required by at least one function (for example, a sound play function or an image display function), and the like. The data storage area may store data (for example, audio data or an address book) or the like created based on use of the mobile phone. In addition/alternatively, the memory 109 may include a high-speed random access memory, and may further include a nonvolatile memory, for example, at least one disk storage device, a flash memory, or other volatile solid-state storage devices.

The processor 110 is a control center of the mobile terminal, and is connected to various parts of the entire mobile terminal through various interfaces and lines, and performs various functions of the mobile terminal and processes data by running or executing the software program and/or the module that are/is stored on the memory 109 and invoking the data stored on the memory 109, to implement overall monitoring on the mobile terminal. The processor 110 may include one or more processing units. Preferentially, the processor 110 may be integrated with an application processor and a modem processor. Optionally, the application processor mainly processes an operating system, a user interface, an application program, and the like, and the modem processor mainly processes wireless communication. It can be understood that, alternatively, the modem processor may not be integrated into the processor 110.

The mobile terminal 100 may further include a power supply 111 (for example, a battery) that supplies power to each component. Preferentially, the power supply 111 may be logically connected to the processor 110 by using a power management system, to implement functions such as charging, discharging, and power consumption management by using the power management system.

Although not shown in FIG. 1, a Bluetooth module or the like may further be included in the mobile terminal 100. Details are not described herein again.

For the ease of understanding the embodiments of the present application, the following describes a communication network system on which a mobile terminal according to the present application is based.

Refer to FIG. 2. FIG. 2 is a diagram of an architecture of a communication network system according to an embodiment of the present application. The communication network system is an NR (New Radio, New Radio) system in a universal mobile telecommunication technology, and the NR system includes UE (User Equipment, user equipment) 201, an E-UTRAN (Evolved UMTS Terrestrial Radio Access Network, evolved UMTS terrestrial radio access network) 202, an EPC (Evolved Packet Core, evolved packet core) 203, and an IP service 204 of an operator that are sequentially communicatively connected.

Optionally, the UE 201 may be the terminal device 100 described above, and details are not described herein again.

The E-UTRAN 202 includes an eNodeB 2021 and another eNodeB 2022 or the like. Optionally, the eNodeB 2021 may be connected to the another eNodeB 2022 via a backhaul (for example, an X2 interface), the eNodeB 2021 is connected to the EPC 203, and the eNodeB 2021 may provide access from the UE 201 to the EPC 203.

The EPC 203 may include an MME (Mobility Management Entity, mobility management entity) 2031, an HSS (Home Subscriber Server, home subscriber server) 2032, another MME 2033, an SGW (Serving Gate Way, serving gate way) 2034, a PGW (PDN Gate Way, PDN gate way) 2035, a PCRF (Policy and Charging Rules Function, policy and charging rules function entity) 2036, and the like. Optionally, the MME 2031 is a control node for processing signaling between the UE 201 and the EPC 203, and provides bearer and connection management. The HSS 2032 is configured to provide some registers to manage a function of, for example, a home location register (not shown in the figure), and store some user-specific information, for example, about service characteristics, a data rate, and the like. All user data may be transmitted through the SGW 2034, the PGW 2035 may provide IP address allocation and other functions for the UE 201, and the PCRF 2036 is a policy and charging control policy decision point for service data flows and IP bearer resources, and selects and provides available policy and charging control decisions for a policy and charging execution function unit (not shown in the figure).

The IP service 204 may include the Internet, an intranet, an IMS (IP Multimedia Subsystem, IP multimedia subsystem), another IP service, and the like.

Although the LTE system is used as an example in the foregoing descriptions for introduction, those skilled in the art should understand that the present application is not only applicable to the LTE system, but also applicable to other wireless communication systems such as the GSM, the CDMA 2000, the WCDMA, the TD-SCDMA, 5G, future new network systems (for example, 6G), and the like. This is not limited herein.

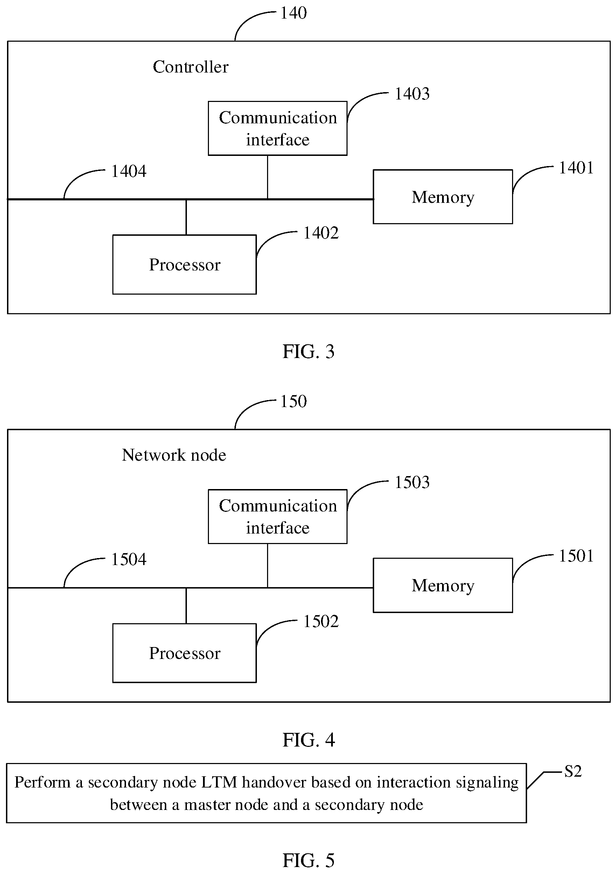

FIG. 3 is a schematic diagram of a hardware structure of a controller 140 according to the present application. The controller 140 includes: a memory 1401 and a processor 1402. The memory 1401 is configured to store program instructions, and the processor 1402 is configured to invoke the program instructions in the memory 1401 to perform a step performed by a controller in Embodiment 1 of the method mentioned above. The implementation principles and beneficial effects thereof are similar, and details are not described herein again.

Optionally, the controller further includes a communication interface 1403, and the communication interface 1403 may be connected to the processor 1402 through a bus 1404. The processor 1402 may control the communication interface 1403 to implement receiving and transmitting functions of the controller 140.

FIG. 4 is a schematic diagram of a hardware structure of a network node 150 according to the present application. The network node 150 includes: a memory 1501 and a processor 1502. The memory 1501 is configured to store program instructions, and the processor 1502 is configured to invoke the program instructions in the memory 1501 to perform a step performed by the first node in Embodiment 1 of the method mentioned above. The implementation principles and beneficial effects thereof are similar, and details are not described herein again.

Optionally, the controller further includes a communication interface 1503, and the communication interface 1503 may be connected to the processor 1502 through a bus 1504. The processor 1502 may control the communication interface 1503 to implement receiving and transmitting functions of the network node 150.

The foregoing integrated module implemented in a form of a software functional module may be stored on a computer-readable storage medium. The software functional module is stored on a storage medium and includes several instructions to enable a computer device (may be a personal computer, a server, a network device, or the like) or a processor (processor) to perform some of the steps of the method according to the embodiments of the present application.

All or some of the foregoing embodiments may be implemented by software, hardware, firmware, or any combination thereof. When implemented by software, all or some of the embodiments may be implemented in a form of a computer program product. The computer program product includes one or more computer instructions. When the computer program instruction(s) are loaded and executed on a computer, processes or functions according to the embodiments of the present application are generated in whole or in part. The computer may be a general-purpose computer, a dedicated computer, a computer network, or another programmable apparatus. The computer instruction(s) may be stored on a storage medium, or transmitted from one storage medium to another storage medium. For example, the computer instruction(s) may be transmitted from one website site, computer, server, or data center to another website site, computer, server, or data center in a wired (for example, coaxial cable, optical fiber, or digital subscriber line (DSL)) or wireless (for example, infrared, wireless, or microwave) manner. The storage medium may be any available medium that can be accessed by a computer, or an integrated data storage device, for example, a server or data center, that includes one or more available media. The available medium may be a magnetic medium (for example, a floppy disk, a hard disk, or a magnetic tape), an optical medium (for example, a DVD), a semiconductor medium (for example, a solid state disk (solid state disk), SSD), or the like.

Based on the hardware structure of the foregoing mobile terminal and the communication network system, various embodiments of the present application are provided.

### Embodiment 1

Refer to FIG. 5. FIG. 5 is a schematic flowchart of a handover method according to embodiment 1. The handover method according to this embodiment of the present application can be applied to at least one secondary node. The method includes the following step.

S2: performing a secondary node LTM handover based on interaction signaling between a master node and the secondary node.

Optionally, an inter-central unit LTN (L1/L2 Triggered Mobility, L1/L2 triggered mobility) handover may be initiated by an SN (Secondary Node, secondary node), or may be initiated by an MN (Master Node, master node).

Optionally, for an inter-central unit SCG (Secondary Cell Group, secondary cell group) LTM handover initiated by the SN, interaction of inter-central unit SCG LTM configuration information may be achieved by enhancing existing inter-base station Xn-interface interaction signaling. Alternatively, new inter-base station Xn-interface interaction signaling may be introduced to achieve interaction of at least one of inter-central unit SCG LTM configuration information, early uplink synchronization information, and subsequent secondary node information for the SCG LTM handover.

Optionally, for an inter-central unit SCG LTM handover initiated by the MN, interaction of inter-central unit SCG LTM configuration information may be achieved by enhancing existing inter-base station Xn-interface interaction signaling.

Optionally, the inter-base station Xn-interface interaction signaling includes interaction signaling between the master node and the secondary node.

Optionally, the interaction signaling between the master node and the secondary node includes at least one of secondary node change request signaling, secondary node change request acknowledge signaling, secondary node change required signaling, secondary node change required confirm signaling, and secondary node LTM required confirm signaling.

Optionally, the secondary node change request signaling includes at least one of a secondary node addition request (SN Addition Request), a secondary node modification request (SN Modification Request), a secondary node release request (SN Release Request), and a secondary node LTM request (SCG LTM Request).

Optionally, the secondary node change request acknowledge signaling includes a secondary node addition request acknowledgment (SN Addition Request Acknowledge), a secondary node modification request acknowledgment (SN Modification Request Acknowledge), a secondary node release request acknowledgment (SN Release Request Acknowledge), and a secondary node LTM request acknowledgment (SCG LTM Request Acknowledge).

Optionally, the secondary node includes a source secondary node and/or a candidate secondary node;

In the technical solution of this embodiment, by performing a secondary node LTM handover based on the interaction signaling between the master node and the secondary node, an LTM handover mechanism is refined, such that an LTM handover scheme not only supports continuous handovers under an intra-central unit, but also supports an inter-central unit handover, thereby improving the applicability and/or diversity of LTM handovers.

### Embodiment 2

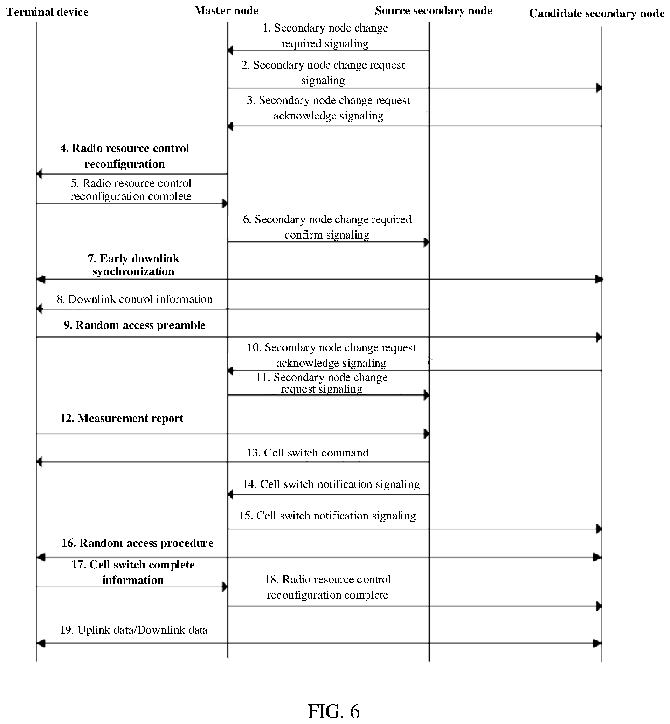

Refer to FIG. 6. FIG. 6 is an interaction timing schematic diagram according to embodiment 2. Based on Embodiment 1 of the present application, this embodiment further discloses a specific process of the inter-central unit SCG LTM handover initiated by the secondary node.

Optionally, a source secondary node transmits the secondary node change required signaling (SN Modification Required) to the master node.

Optionally, the secondary node change required signaling is used for initiating secondary node LTM configuration information.

Optionally, the secondary node change required signaling carries at least one of a random access configuration, a TCI state configuration, a channel state indication configuration, a radio resource control configuration, and a layer-1 measurement event.

Optionally, in this embodiment, the secondary node change required signaling may be existing signaling. By enhancing the existing signaling to carry an LTM handover configuration parameter, the complexity of signaling processing can be reduced. For example, the signaling is used for providing the LTM handover configuration parameter for the master node and is determined as a secondary cell group LTM handover request initiated by the secondary node, to trigger and/or indicate a subsequent processing mechanism for the master node.

Optionally, the secondary node change required signaling may alternatively be newly introduced signaling, for example, a secondary cell group LTM request acknowledgment (SCG LTM Request Required). By introducing the new signaling, functions of information may be distinguished and/or clarified, thereby reducing the complexity of signaling processing, and/or reducing signaling overheads and/or redundant information. For example, when the master node receives the secondary cell group LTM request acknowledgment, it can be clearly identified that a function thereof is an SCG LTM handover initiated by the secondary node.

Optionally, the radio resource control configuration includes a central unit identifier and/or a candidate cell configuration.

Optionally, the secondary node change required signaling and/or secondary node LTM request acknowledge signaling carry/carries the central unit identifier.

Optionally, the central unit identifier is a central unit identifier corresponding to a serving cell of the secondary node.

Optionally, the central unit identifier is used for determining whether a handover is an inter-central unit LTM handover and/or an inter-central unit SCG LTM handover.

Optionally, after receiving the secondary node change required signaling transmitted by the source secondary node, the master node initiates a secondary node change request procedure, to transmit the secondary node change request (SN Modification Request) signaling to at least one candidate secondary node.

Optionally, the at least one candidate secondary node receives the secondary node change request signaling transmitted by the master node.

Optionally, the source secondary node and the at least one candidate secondary node are inter-central unit (Inter-CU) and/or inter-base station (Inter-gNB) secondary nodes.

Optionally, the secondary node change request signaling is used for providing a candidate secondary node LTM configuration.

Optionally, the secondary node change request signaling includes at least one of a target candidate cell identifier, a candidate cell LTM configuration identifier, an LTM configuration identifier mapping list, and a channel state indication (CSI, Channel State Information) request resource configuration.

Optionally, the secondary node change request signaling may alternatively be newly introduced signaling, for example, secondary cell group (SCG, Secondary Cell Group) LTM request (SCG LTM Request) signaling.

Optionally, the secondary node change request signaling may further carry a central unit identifier request indication used for requesting for an indication of a central unit identifier corresponding to the candidate secondary node.

Optionally, the secondary node change request signaling may further carry the central unit identifier and/or the central unit identifier mapping list used for providing a secondary node central unit identifier.

Optionally, the secondary node change request signaling is used for requesting for at least one candidate cell configuration in the target secondary node, including: a candidate cell LTM configuration and/or a secondary cell group LTM configuration.

Optionally, the central unit identifier is used for determining whether a handover is an inter-central unit LTM handover and/or an inter-central unit SCG LTM handover.

Optionally, the secondary node change request signaling may alternatively be at least one of a secondary node modification request, a secondary node addition request (SN Addition Request), and a secondary node release request (SN Release Request).

Optionally, the at least one secondary node, in response to the secondary node change request signaling transmitted by the master node, transmits the secondary node change request acknowledge signaling (SN Modification Request Acknowledge) to the master node.

Optionally, the secondary node change request acknowledge signaling includes at least one of the random access configuration, the TCI state configuration, the channel state indication configuration, the radio resource control configuration, the layer-1 measurement event, and a channel state indication report configuration.

Optionally, the secondary node change request acknowledge signaling may alternatively be newly introduced signaling, for example, secondary cell group LTM request acknowledge (SCG LTM Request Acknowledge) signaling.

Optionally, the radio resource configuration includes the central unit identifier and/or a candidate cell configuration.

Optionally, the secondary node change request acknowledge signaling further carries the central unit identifier used for providing the central unit identifier corresponding to the candidate secondary node.

Optionally, the secondary node change request acknowledge signaling is used for providing at least one candidate cell configuration in the target secondary node, including: an LTM configuration and/or a secondary cell group LTM configuration.

Optionally, the secondary node change request acknowledge signaling may alternatively be at least one of the secondary node modification request acknowledgment, the secondary node addition request acknowledgment (SN Addition Request Acknowledge), and the secondary node release request acknowledgment (SN Release Request Acknowledge).

Optionally, the master node transmits the secondary node change request signaling to the candidate secondary node and/or the source secondary node.

Optionally, the secondary node change request signaling carries other candidate secondary node configuration information, including at least one of the random access configuration, the TCI state configuration, the channel state indication configuration, the radio resource control configuration, the layer-1 measurement event, and the channel state indication report configuration.

Optionally, the secondary node change request signaling may further be at least one of the secondary node addition request, the secondary node modification request, the secondary node release request, and the secondary cell group LTM request.

Optionally, the secondary node change request signaling may further carry the central unit identifier used for providing a central unit identifier corresponding to another candidate secondary node.

Optionally, the source secondary node and/or the candidate secondary node transmit/transmits response signaling to the master node. Optionally, the response signaling carries updated source secondary node/candidate secondary node configuration information, including at least one of the random access configuration, the TCI state configuration, the channel state indication configuration, the radio resource control configuration, the layer-1 measurement event, and the channel state indication report configuration. Optionally, the response signaling may further be at least one of the secondary node addition request acknowledgment, the secondary node modification request acknowledgment, the secondary node release request acknowledgment, and the secondary cell group LTM request acknowledgment.

In the technical solution of this embodiment, the source secondary node transmits the secondary node change required signaling to the master node; and the candidate secondary node receives the secondary node change request signaling transmitted by the master node, and transmits the secondary node change request acknowledge signaling to the master node, to achieve an inter-central unit SCG LTM handover initiated by the secondary node. By enhancing the existing signaling to carry an LTM handover configuration request parameter, the complexity of signaling processing can be reduced. In addition, by introducing the new signaling, functions of information are distinguished and/or clarified, thereby reducing the complexity of signaling processing, and/or reducing signaling overheads and/or redundant information.

### Embodiment 3

Based on any of the foregoing embodiments of the present application, this embodiment further discloses the handover method according to the foregoing embodiments, and specifically discloses a solution for performing a radio resource control reconfiguration.

Optionally, after receiving the secondary node change request acknowledge signaling transmitted by the at least one secondary node, the master node may initiate a radio resource control reconfiguration procedure, to transmit radio resource control reconfiguration (RRC Reconfiguration) signaling to a terminal device.

Optionally, the radio resource control reconfiguration signaling includes at least one of the candidate cell configuration, a reference configuration, the TCI state configuration, the channel state indication configuration, the layer-1 measurement event, an early uplink synchronization configuration, the channel state indication report configuration, and the central unit identifier corresponding to the serving cell of the secondary node.

Optionally, the radio resource reconfiguration further includes central unit identity information.

Optionally, the candidate cell configuration further includes the central unit identity information.

Optionally, the central unit identifier may be configured in the candidate cell configuration.

Optionally, the master node initiates the radio resource control reconfiguration after a candidate secondary node and/or source secondary node configuration is obtained.

Optionally, the candidate cell configuration may be a complete radio resource control configuration (Complete configuration) or a delta radio resource control configuration (Delta configuration).

Optionally, the candidate cell configuration is associated by using the candidate cell identifier.

Optionally, the early uplink synchronization configuration includes a target candidate cell random access configuration.

Optionally, the radio resource control reconfiguration includes: an inter-central unit LTM handover configuration and/or an inter-central unit SCG LTM handover configuration.

Optionally, the central unit identifier is used for determining whether a handover is an inter-central unit LTM handover and/or an inter-central unit SCG LTM handover.

Optionally, the terminal device transmits radio resource control reconfiguration complete (RRC Reconfiguration Complete) signaling to the master node, to complete an LTM handover configuration.

Optionally, the radio resource control reconfiguration complete signaling includes: in response to completion of the inter-central unit LTM handover configuration and/or in response to completion of the inter-central unit SCG LTM handover configuration.

Optionally, the master node receives the radio resource control reconfiguration complete signaling reported by the terminal device, and transmits the secondary node change required confirm (SN Modification Confirm) signaling to the source secondary node.

Optionally, the secondary node change required confirm signaling may alternatively be newly introduced signaling, for example, the secondary node LTM required confirm (SCG LTM Request Confirm) signaling. By introducing the new signaling, functions of information are distinguished and/or clarified, thereby reducing the complexity of signaling processing, and/or reducing signaling overheads and/or redundant information. For example, the master node provides feedback that the SCG LTM handover configuration is completed.

Optionally, the secondary node change required confirm signaling further carries the inter-central unit LTM handover configuration, including: a candidate LTM handover configuration and/or a candidate secondary cell group LTM handover configuration.

Optionally, the secondary node change required confirm signaling carries at least one of the candidate cell identifier, the candidate cell LTM configuration identifier, the LTM configuration identifier mapping list, a candidate cell channel state indication report configuration, and completion of the radio resource control reconfiguration.

In the technical solution of this embodiment, the master node transmits the radio resource control reconfiguration signaling to the terminal device, to enable the terminal device to complete the LTM handover configuration, and then the master node transmits the secondary node change required confirm signaling to the source secondary node. In this way, an inter-central unit SCG LTM handover may be implemented by enhancing existing signaling and/or introducing new signaling.

### Embodiment 4

Based on any of the foregoing embodiments of the present application, this embodiment further discloses the handover method according to the foregoing embodiments, and specifically discloses a solution for performing early downlink synchronization.

Optionally, the terminal device performs candidate cell early downlink synchronization based on an LTM cell handover configuration, including: performing a target cell measurement based on TCI state information, and/or performing a target cell measurement based on a layer-1 measurement configuration.

Optionally, the source secondary node may require the terminal device to perform an early uplink synchronization indication, and trigger the terminal device to transmit a random access preamble by issuing downlink control information (DCI, Downlink Control Information).

Optionally, the source secondary node may trigger the terminal device to perform the early uplink synchronization on at least one target candidate cell.

Optionally, the downlink control information carries candidate cell identity information.

Optionally, if the terminal device receives the early uplink synchronization indication transmitted by the source secondary node, the random access preamble (Preamble) is transmitted based on an indicated target candidate cell.

Optionally, the terminal device determines, based on the candidate cell identity information, a target cell to which the random access preamble is transmitted. For example, the LTM handover configuration is indexed by the candidate cell identifier and the early uplink synchronization configuration is determined.

Optionally, the target candidate cell receives the random access preamble transmitted by the terminal device, calculates timing advance information, and transmits feedback information to the master node via the secondary node.

Optionally, the timing advance information is carried in master node-secondary node timing advance information transfer signaling and/or inter-base station timing advance information transfer signaling.

Optionally, the secondary node may use the existing interaction signaling between the secondary node and the master node to carry the timing advance information. The signaling includes at least one of the secondary node addition request acknowledgment (SN Addition Request Acknowledge), the secondary node modification request acknowledgment (SN Modification Request Acknowledge), the secondary node release request acknowledgment (SN Release Request Acknowledge), and a radio resource control transfer (RRC Transfer). By enhancing the existing signaling to carry an early uplink synchronization parameter (for example, the timing advance information), the complexity of signaling processing can be reduced. For example, when the master node receives response information from a target candidate secondary node that carries the timing advance information, it can be known that the source secondary node has triggered the terminal device to perform uplink synchronization, and/or an information element (IE, Information Element) may be added in the signaling to carry the timing advance information, thereby reducing the complexity of signaling design.

Optionally, the secondary node may alternatively carry the timing advance information through new interaction signaling between the secondary node and the master node. For example, the signaling is secondary node-master node timing advance information transfer (SN-MN TA Information Transfer) signaling, inter-base station timing advance information transfer (gNB TA Information Transfer) signaling, the secondary cell group LTM request acknowledge (SCG LTM Request Acknowledge) signaling, and the like. In this embodiment, the name of each signaling is not specifically limited.

Optionally, the secondary node-master node timing advance information transfer signaling further carries secondary node identity information.

Optionally, the secondary node identity information is used for helping the master node and/or the secondary node to identify a secondary node that successfully performs the early uplink synchronization.

By introducing the new interaction signaling between the secondary node and the master node, functions of information are distinguished and/or clarified, thereby reducing the complexity of signaling processing, and/or reducing signaling overheads and/or redundant information. For example, when receiving the signaling, the master node can clearly identify that a function thereof is response information for a secondary cell to trigger the early uplink synchronization, and perform forwarding immediately.

Optionally, the master node forwards, to the source secondary node, received feedback information transmitted by the candidate secondary node, and signaling used for the forwarding may be the interaction signaling between the master node and the secondary node in the existing signaling, for example, the secondary node addition request (SN Addition Request), the secondary node modification request (SN Modification Request), the secondary node release request (SN Release Request), the radio resource control transfer (RRC Transfer), and the like.

Optionally, the master node forwards, to the source secondary node, received feedback information transmitted by the candidate secondary node, and signaling used for the forwarding may alternatively be new interaction signaling between the master node and the secondary node, for example, the master node-secondary node timing advance information transfer (MN-SN TA Information Transfer) signaling, the inter-base station timing advance information transfer (gNB TA Information Transfer) signaling, the secondary cell group LTM request (SCG LTM Request) signaling, and the like. The foregoing signaling carries candidate cell timing advance information in the feedback information transmitted by the candidate secondary node to the master node and/or carries a secondary node identifier.

In the technical solution of this embodiment, the source secondary node transmits the downlink control information to trigger the terminal device to perform early uplink synchronization with the at least one target candidate cell; and by enhancing the existing signaling and/or introducing the new signaling, the candidate secondary node may enable the master node to receive the timing advance information and/or the secondary node identifier and perform forwarding to the source secondary node, to further implement the inter-central unit SCG LTM handover.

### Embodiment 5

Based on any of the foregoing embodiments of the present application, this embodiment further discloses the handover method according to the foregoing embodiments, and specifically discloses a solution for performing an LTM handover.

Optionally, the terminal device performs layer-1 measurement reporting.

Optionally, the terminal device reports a measurement result based on a report configuration and/or reports a measurement result based on a measurement event.

Optionally, when a candidate cell and/or a serving cell satisfies the measurement event, the measurement reporting is triggered.

Optionally, the source secondary node issues a cell switch command (Cell Switch Command) to trigger the terminal device to perform an LTM handover.

Optionally, the terminal device performs an inter-central unit LTM handover and/or an inter-central unit SCG LTM handover according to the cell switch command.

Optionally, the cell switch command carries at least one of target candidate cell timing advance information, a candidate cell configuration identifier (Candidate configuration index), and a candidate cell random access parameter.

Optionally, the timing advance information belongs to a cell of an inter-central unit secondary node.

Optionally, the cell switch command is transmitted by using a MAC CE (MAC Control Element, MAC control element).

Optionally, the terminal device determines whether an handover is an inter-central unit handover based on the central unit identifier corresponding to the serving cell of the secondary node and a candidate cell central unit identifier.

Optionally, the source secondary node transmits cell switch notification signaling to notify the master node to perform a secondary cell group handover.

Optionally, the cell switch notification signaling is carried in secondary node-master node cell switch notification signaling.

Optionally, the cell switch notification signaling may be existing signaling, including at least one of the secondary node modification required, the secondary node modification request acknowledgment, the secondary node addition request acknowledgment, the secondary node release request acknowledgment, the radio resource control transfer, and the secondary cell group LTM request acknowledgment.

Optionally, the cell switch notification signaling may alternatively be newly introduced signaling, for example, the secondary node-master node cell switch notification (SN-MN Cell Switch Notification). This is not specifically limited in this embodiment.

Optionally, the cell switch notification signaling carries information about the candidate secondary node and/or the target secondary node, including at least one of the secondary node identifier, the candidate cell identifier (Candidate Cell Identity), a cell identifier (Cell Identity), a central unit identifier (CU-ID), and a candidate configuration identifier (Candidate Config Identity).

Optionally, the information about the candidate secondary node and/or the target secondary node is used for indicating the master node to forward the first uplink data transmitted by the terminal device to the candidate secondary node, and/or to forward uplink information transfer multi-radio dual connectivity (UL Information Transfer MRDC) to the candidate secondary node.

Optionally, the uplink information transfer multi-radio dual connectivity carries radio resource control reconfiguration complete information.

In the technical solution of this embodiment, the source secondary node actively notifies the master node of the information about the candidate secondary node that performs the secondary cell group LTM handover, to help the master node in forwarding the first uplink data and/or the radio resource control reconfiguration complete information transmitted uplink by the terminal device after the handover is completed. This avoids an LTM handover failure and/or an inability to perform data forwarding (Data Forwarding) due to the master node not knowing the secondary node to which the terminal device is about to hand over, thereby avoiding a data interaction delay.

### Embodiment 6

Based on any of the foregoing embodiments of the present application, this embodiment further discloses the handover method according to the foregoing embodiments, and further specifically discloses a solution for performing an LTM handover.

Optionally, the master node transmits the cell switch notification signaling to the candidate secondary node, to notify the candidate secondary node to perform a secondary cell group handover.

Optionally, the cell switch notification signaling may be existing signaling, including at least one of the secondary node modification required, the secondary node modification request acknowledgment, the secondary node addition request acknowledgment, the secondary node release request acknowledgment, the radio resource control transfer, and the secondary cell group LTM request acknowledgment.

Optionally, the cell switch notification signaling may alternatively be newly introduced signaling, for example, the master node-secondary node cell switch notification (MN-SN Cell Switch Notification). This is not specifically limited in this embodiment.

Optionally, the cell switch notification signaling carries information about the candidate secondary node and/or the target secondary node, including at least one of the secondary node identifier, the candidate cell identifier (Candidate Cell Identity), the cell identifier (Cell Identity), the central unit identifier (CU-ID), and the candidate configuration identifier (Candidate Config Identity).

Optionally, the information about the candidate secondary node and/or the target secondary node is used for indicating the master node to forward the first uplink data transmitted by the terminal device to the candidate secondary node, and/or to forward the uplink information transfer multi-radio dual connectivity (UL Information Transfer MRDC) to the candidate secondary node.

Optionally, the uplink information transfer multi-radio dual connectivity carries radio resource control reconfiguration complete information.

Optionally, after the terminal device receives the cell switch command transmitted by the source secondary node, when without the timing advance information of the candidate cell, a random access procedure is performed.

Optionally, the terminal device performs the random access procedure with the target candidate cell based on the random access parameter carried in the cell switch command.

Optionally, the terminal device transmits cell switch complete information and/or the first uplink data to the master node.

Optionally, the cell switch complete information may be the uplink information transfer multi-radio dual connectivity (UL Information Transfer MRDC) and/or the radio resource control reconfiguration complete signaling.

Optionally, the cell switch complete information is used for indicating that the secondary cell group LTM handover is completed.

Optionally, the uplink information transfer multi-radio dual connectivity signaling further carries at least one of the secondary node identifier, the candidate cell identifier (Candidate Cell Identity), the cell identifier (Cell Identity), the central unit identifier (CU-ID), and the candidate configuration identifier (Candidate Config Identity).

Optionally, in a random access channel-less (RACH-Less) scenario, if the terminal device has performed an early uplink synchronization procedure and transmits the first uplink data and/or the radio resource control reconfiguration complete signaling based on the timing advance information carried in the cell switch command, when new downlink and/or uplink scheduling transmitted by the candidate cell is received, the cell switching is considered completed.

Optionally, if the terminal device receives the cell switch command and performs the random access procedure, the cell switching is considered completed when the random access procedure is successfully completed.

Optionally, after the cell switching is completed, the candidate cell is regarded as a serving cell.

In the technical solution of this embodiment, by enhancing the existing signaling and/or introducing the new interaction signaling between the master node and the secondary node, it informs the master node of the target secondary node that performs the secondary cell group LTM handover, and/or the information about the target secondary node is carried in the radio resource reconfiguration complete signaling, the candidate secondary node is notified to perform the secondary cell group handover.

### Embodiment 7

Based on any of the foregoing embodiments of the present application, this embodiment further discloses the handover method according to the foregoing embodiments, and further specifically discloses a solution for performing an LTM handover.

Optionally, the master node forwards the cell switch complete information and/or the first uplink data to the target secondary node.

Optionally, a manner in which the master node selects or determines the target secondary node from the candidate secondary node includes the following.

Manner 1: The master node determines the target secondary node based on information provided by the source secondary node.

Optionally, the master node determines the target secondary node based on the information about the target secondary node provided in the cell switch notification signaling transmitted by the source secondary node, and forwards the uplink data and/or the radio resource control reconfiguration complete signaling transmitted by the terminal device to the target secondary node.

Optionally, the source secondary node transmits the cell switch notification signaling to notify the master node to perform a secondary cell group handover.

Optionally, the cell switch notification signaling is carried in the secondary node-master node cell switch notification signaling.

Optionally, the cell switch notification signaling may be existing signaling, including at least one of the secondary node modification required, the secondary node modification request acknowledgment, the secondary node addition request acknowledgment, the secondary node release request acknowledgment, the radio resource control transfer, and the secondary cell group LTM request acknowledgment.

Optionally, the cell switch notification signaling may alternatively be newly introduced signaling, for example, the secondary node-master node cell switch notification (SN-MN Cell Switch Notification). This is not specifically limited in this embodiment.

Optionally, the cell switch notification signaling carries information about the candidate secondary node and/or the target secondary node, including at least one of the secondary node identifier, the candidate cell identifier (Candidate Cell Identity), the cell identifier (Cell Identity), the central unit identifier (CU-ID), and the candidate configuration identifier (Candidate Config Identity).

Optionally, the information about the candidate secondary node and/or the target secondary node is used for indicating the master node to forward the first uplink data transmitted by the terminal device to the candidate secondary node, and/or to forward the uplink information transfer multi-radio dual connectivity (UL Information Transfer MRDC) to the candidate secondary node.

Optionally, the uplink information transfer multi-radio dual connectivity carries the radio resource control reconfiguration complete information.

Manner 2: The master node determines the target secondary node based on information provided by the terminal device.

Optionally, the master node determines the target secondary node based on the information about the target secondary node provided in the uplink information transfer multi-radio dual connectivity signaling and/or the radio resource control reconfiguration complete signaling, and forwards the uplink data and/or the radio resource control reconfiguration complete signaling transmitted by the terminal device to the target secondary node.

Optionally, the terminal device transmits the uplink data based on the timing advance information and/or receives new downlink data.

Optionally, the terminal device transmits the uplink data based on the timing advance information.

Optionally, the uplink data is the first uplink data.

Optionally, after the terminal device hands over to the target secondary node in the candidate secondary node, continuous LTM handovers to another candidate secondary node may be performed.

Optionally, the another candidate secondary node may be a candidate secondary node other than the target secondary node, or may be the master node in the foregoing embodiments.

In the technical solution of this embodiment, the terminal device actively notifies the master node of the information about the candidate secondary node that performs the secondary cell group LTM handover, to help the master node in determining the target secondary node and forwarding, to the target secondary node, the first uplink data and/or the radio resource control reconfiguration complete information transmitted by the terminal device after the handover is completed, thereby avoiding an LTM handover failure and/or an inability to perform data forwarding due to the master node not knowing the secondary node to which the terminal device is about to hand over, and avoiding a data interaction delay; and/or specifying an inter-central unit secondary node LTM handover procedure and/or an inter-central unit SCG LTM handover procedure, and/or enhancing the existing signaling and/or introducing new interaction signaling to satisfy requirements for an inter-central unit handover.

### Embodiment 8

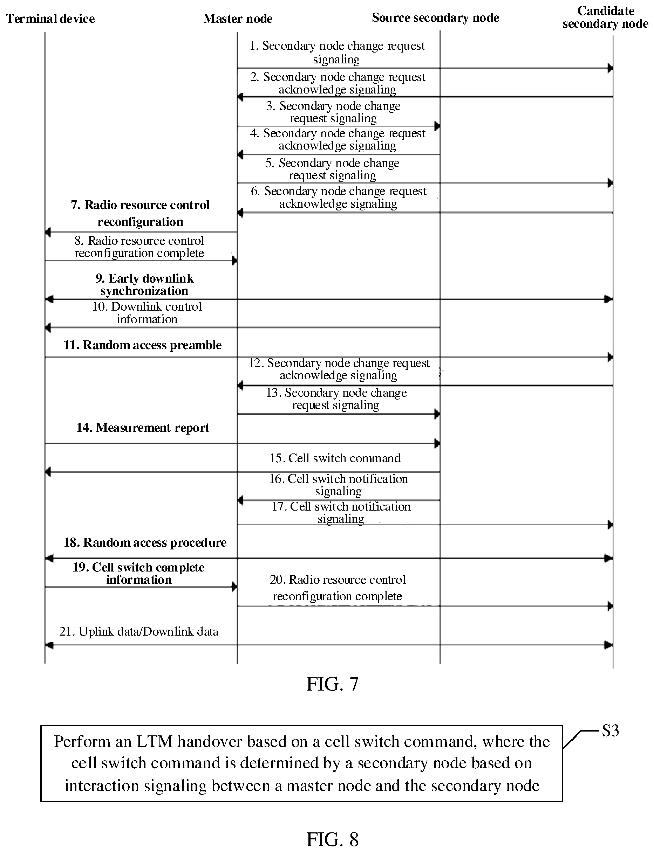

Refer to FIG. 7. FIG. 7 is an interaction timing schematic diagram according to embodiment 8. Based on Embodiment 1 of the present application, this embodiment further discloses a specific process of the inter-central unit SCG LTM handover initiated by the master node.

Optionally, the master node initiates a secondary node change request procedure, to transmit the secondary node change request (SN Modification Request) signaling to at least one candidate secondary node.

Optionally, the at least one candidate secondary node receives the secondary node change request signaling transmitted by the master node.

Optionally, the source secondary node and the at least one candidate secondary node are inter-central unit (Inter-CU) and/or inter-base station (Inter-gNB) secondary nodes.

Optionally, the secondary node change request signaling is used for providing a candidate secondary node LTM configuration.

Optionally, the secondary node change request signaling includes at least one of a target candidate cell identifier, a candidate cell LTM configuration identifier, an LTM configuration identifier mapping list, and a channel state indication (CSI, Channel State Information) request resource configuration.

Optionally, the secondary node change request signaling may alternatively be newly introduced signaling, for example, secondary cell group (SCG, Secondary Cell Group) LTM request (SCG LTM Request) signaling.

Optionally, the secondary node change request signaling may further carry a central unit identifier request indication used for requesting for an indication of a central unit identifier corresponding to the candidate secondary node.

Optionally, the secondary node change request signaling may further carry the central unit identifier and/or the central unit identifier mapping list used for providing a secondary node central unit identifier.

Optionally, the secondary node change request signaling is used for requesting for at least one candidate cell configuration in the target secondary node, including: a candidate cell LTM configuration and/or a secondary cell group LTM configuration.

Optionally, the central unit identifier is used for determining whether a handover is an inter-central unit LTM handover and/or an inter-central unit SCG LTM handover.

Optionally, the secondary node change request signaling includes at least one of a secondary node modification request, a secondary node addition request (SN Addition Request), and a secondary node release request (SN Release Request).

Optionally, the at least one secondary node, in response to the secondary node change request signaling transmitted by the master node, transmits the secondary node change request acknowledge signaling (SN Modification Request Acknowledge) to the master node.

Optionally, the secondary node change request acknowledge signaling includes at least one of a random access configuration, a TCI state configuration, a channel state indication configuration, a radio resource control configuration, a layer-1 measurement event, and a channel state indication report configuration.

Optionally, the secondary node change request acknowledge signaling may alternatively be newly introduced signaling, for example, secondary cell group LTM request acknowledge (SCG LTM Request Acknowledge) signaling.

Optionally, the radio resource configuration includes the central unit identifier and/or a candidate cell configuration.

Optionally, the secondary node change request acknowledge signaling further carries the central unit identifier used for providing the central unit identifier corresponding to the candidate secondary node.

Optionally, the secondary node change request acknowledge signaling is used for providing at least one candidate cell configuration in the target secondary node, including: an LTM configuration and/or a secondary cell group LTM configuration.

Optionally, the secondary node change request acknowledge signaling includes at least one of the secondary node modification request acknowledgment, the secondary node addition request acknowledgment (SN Addition Request Acknowledge), and the secondary node release request acknowledgment (SN Release Request Acknowledge).

Optionally, the master node transmits the secondary node change request signaling to the source secondary node.

Optionally, the secondary node change request signaling may be existing signaling used for carrying collected candidate secondary node configuration information, including at least one of a target candidate cell identifier, a candidate cell LTM configuration identifier, an LTM configuration identifier mapping list, a random access configuration, a TCI state configuration, a channel state indication configuration, a radio resource control configuration, a layer-1 measurement event, and a channel state indication report configuration.

By enhancing the existing signaling to carry an LTM handover configuration request parameter, the complexity of signaling processing can be reduced. For example, when the master node carries identity information and requests a configuration parameter by using enhanced signaling, the secondary node determines, based on the carried content, the purpose of the request signaling and prepare a subsequent processing mechanism.

Optionally, the secondary node change request signaling may alternatively be newly introduced signaling, for example, a secondary cell group (SCG, Secondary Cell Group) LTM request, namely, SCG LTM Request.

By introducing the new signaling, functions of information are distinguished and/or clarified, thereby reducing the complexity of signaling processing, and/or reducing signaling overheads and/or redundant information. For example, when receiving the signaling, the target secondary node can clearly identify that a function thereof is to request for providing a secondary cell LTM handover configuration.

Optionally, the secondary node change request signaling may further carry a central unit identifier and/or a central unit identifier mapping list used for providing a secondary node central unit identifier.

Optionally, the secondary node change request signaling may further be at least one of the secondary node addition request, the secondary node modification request, the secondary node release request, and the secondary cell group LTM request.

Optionally, the source secondary node transmits response signaling to the master node.

Optionally, the response signaling is the secondary node change request acknowledge signaling.

Optionally, the secondary node change request acknowledge signaling carries updated source secondary node and/or candidate secondary node configuration information, including at least one of the random access configuration, the TCI state configuration, the channel state indication configuration, the radio resource control configuration, and the layer-1 measurement event.

Optionally, the radio resource control configuration further includes a central unit identifier corresponding to a serving cell of the secondary node and/or a candidate cell configuration.

Optionally, the secondary node change request acknowledge signaling may be existing signaling, including at least one of the secondary node addition request acknowledgment, the secondary node modification request acknowledgment, the secondary node release request acknowledgment, and the secondary cell group LTM request acknowledgment.

Optionally, the secondary node change request acknowledge signaling may alternatively be newly introduced signaling, for example, a secondary cell group LTM request acknowledgment (SCG LTM Request Acknowledge).

Optionally, the secondary node change request acknowledge signaling may further carry the central unit identifier used for providing the central unit identifier corresponding to the candidate secondary node.

Optionally, the secondary node change request acknowledge signaling is used for providing at least one candidate cell configuration in the target secondary node, including: an LTM configuration and/or a secondary cell group LTM configuration.

Optionally, the master node transmits the secondary node change request signaling to the candidate secondary node.

Optionally, the secondary node change request signaling carries other candidate secondary node configuration information, including at least one of the random access configuration, the TCI state configuration, the channel state indication configuration, the radio resource control configuration, and the layer-1 measurement event.

Optionally, the secondary node change request signaling may further be at least one of the secondary node addition request, the secondary node modification request, the secondary node release request, and the secondary cell group LTM request.

Optionally, the secondary node change request signaling may further carry the central unit identifier used for providing the central unit identifier corresponding to another candidate secondary node.

Optionally, the candidate secondary node transmits response signaling to the master node. Optionally, the response signaling carries the updated candidate secondary node configuration information, including at least one of the random access configuration, the TCI state configuration, the channel state indication configuration, the radio resource control configuration, and the layer-1 measurement event.

Optionally, the response signaling is the secondary node change request acknowledge signaling.

Optionally, the secondary node change request acknowledge signaling may be existing signaling, including at least one of the secondary node addition request acknowledgment, the secondary node modification request acknowledgment, the secondary node release request acknowledgment, and the secondary cell group LTM request acknowledgment.

Optionally, the secondary node change request acknowledge signaling may alternatively be newly introduced signaling, for example, a secondary cell group LTM request acknowledgment (SCG LTM Request Acknowledge).

Optionally, in another embodiment, the master node may alternatively transmit the secondary node change request signaling to the source secondary node first, and then transmit the secondary node change request signaling to the candidate secondary node. This embodiment does not limit an order of transmitting the secondary node change request signaling to the source secondary node and the candidate secondary node.

In the technical solution of this embodiment, the master node transmits the secondary node change request signaling to the source secondary node and the candidate secondary node, to achieve an inter-central unit SCG LTM handover initiated by the master node. By enhancing the existing signaling to carry an LTM handover configuration request parameter, the complexity of signaling processing can be reduced. In addition, by introducing the new signaling, functions of information may be distinguished and/or clarified, thereby reducing the complexity of signaling processing, and/or reducing signaling overheads and/or redundant information.

### Embodiment 9

Based on any of the foregoing embodiments of the present application, this embodiment further discloses the handover method according to the foregoing embodiments, and specifically discloses a solution for performing a radio resource control reconfiguration.

Optionally, after receiving the secondary node change request acknowledge signaling transmitted by the at least one secondary node, the master node may initiate a radio resource control reconfiguration procedure, to transmit radio resource control reconfiguration (RRC Reconfiguration) signaling to a terminal device.

Optionally, the radio resource control reconfiguration signaling includes at least one of the candidate cell configuration, a reference configuration, the TCI state configuration, the channel state indication configuration, the layer-1 measurement event, an early uplink synchronization configuration, the channel state indication report configuration, and the central unit identifier corresponding to the serving cell of the secondary node.

Optionally, the radio resource reconfiguration further includes central unit identity information.

Optionally, the candidate cell configuration further includes the central unit identity information.

Optionally, the central unit identifier may be configured in the candidate cell configuration.

Optionally, the master node initiates the radio resource control reconfiguration after a candidate secondary node and/or source secondary node configuration is obtained.

Optionally, the candidate cell configuration may be a complete radio resource control configuration or a delta radio resource control configuration.

Optionally, the candidate cell configuration is associated by using the candidate cell identifier.

Optionally, the early uplink synchronization configuration includes a target candidate cell random access configuration.

Optionally, the radio resource control reconfiguration includes: an inter-central unit LTM handover configuration and/or an inter-central unit SCG LTM handover configuration.

Optionally, the central unit identifier is used for determining whether a handover is an inter-central unit LTM handover and/or an inter-central unit SCG LTM handover.

Optionally, the terminal device transmits radio resource control reconfiguration complete (RRC Reconfiguration Complete) signaling to the master node, to complete an LTM handover configuration.

Optionally, the radio resource control reconfiguration complete signaling includes: in response to completion of the inter-central unit LTM handover configuration and/or in response to completion of the inter-central unit SCG LTM handover configuration.

In the technical solution of this embodiment, the master node transmits the radio resource control reconfiguration signaling to the terminal device, to enable the terminal device to complete the LTM handover configuration, thereby implementing an inter-central unit SCG LTM handover by enhancing existing signaling and/or introducing new signaling.

### Embodiment 10

Based on any of the foregoing embodiments of the present application, this embodiment further discloses the handover method according to the foregoing embodiments, and specifically discloses a solution for performing early downlink synchronization.

Optionally, the terminal device performs candidate cell early downlink synchronization based on an LTM cell handover configuration, including: performing a target cell measurement based on TCI state information, and/or performing a target cell measurement based on a layer-1 measurement configuration.

Optionally, the source secondary node may require the terminal device to perform an early uplink synchronization indication, and trigger the terminal device to transmit a random access preamble by issuing downlink control information.

Optionally, the source secondary node may trigger the terminal device to perform the early uplink synchronization with at least one target candidate cell.

Optionally, the downlink control information carries candidate cell identity information.

Optionally, if the terminal device receives the early uplink synchronization indication transmitted by the source secondary node, the random access preamble is transmitted based on an indicated target candidate cell.

Optionally, the terminal device determines, based on the candidate cell identity information, a target cell to which the random access preamble is transmitted. For example, the LTM handover configuration is indexed by using the candidate cell identifier and the early uplink synchronization configuration is determined.

Optionally, the target candidate cell receives the random access preamble transmitted by the terminal device, calculates the timing advance information, and transmits feedback information to the master node via the secondary node.

Optionally, the timing advance information is carried in master node-secondary node timing advance information transfer signaling and/or inter-base station timing advance information transfer signaling.

Optionally, the secondary node may use the existing interaction signaling between the secondary node and the master node to carry the timing advance information. The signaling includes at least one of the secondary node addition request acknowledgment, the secondary node modification request acknowledgment, the secondary node release request acknowledgment, and a radio resource control transfer. By enhancing the existing signaling to carry an early uplink synchronization parameter (for example, the timing advance information), the complexity of signaling processing can be reduced. For example, when the master node receives response information from a target candidate secondary node that carries the timing advance information, it can be known that the source secondary node has triggered the terminal device to perform uplink synchronization.

Optionally, the secondary node may alternatively carry the timing advance information through new interaction signaling between the secondary node and the master node. For example, the signaling is secondary node-master node timing advance information transfer signaling, inter-base station timing advance information transfer signaling, the secondary cell group LTM request acknowledge signaling, and the like. In this embodiment, the name of each signaling is not specifically limited.

Optionally, the secondary node-master node timing advance information transfer signaling further carries secondary node identity information.

Optionally, the secondary node identity information is used for helping the master node and/or the secondary node to identify a secondary node that successfully performs the early uplink synchronization.

By introducing the new interaction signaling between the secondary node and the master node, functions of information transfer are distinguished and/or clarified, thereby reducing the complexity of signaling processing, and/or reducing signaling overheads and/or redundant information. For example, when receiving the signaling, the master node can clearly identify that a function thereof is response information for a secondary cell to trigger the early uplink synchronization, and perform forwarding immediately.

Optionally, the master node forwards, to the source secondary node, received feedback information transmitted by the candidate secondary node, and signaling used for the forwarding may be the interaction signaling between the master node and the secondary node in the existing signaling, for example, the secondary node addition request, the secondary node modification request, the secondary node release request, the radio resource control transfer, etc.

Optionally, the master node forwards, to the source secondary node, received feedback information transmitted by the candidate secondary node, and signaling used for the forwarding may alternatively be new interaction signaling between the master node and the secondary node, for example, the master node-secondary node timing advance information transfer signaling, the inter-base station timing advance information transfer signaling, the secondary cell group LTM request signaling, and the like. The foregoing signaling carries candidate cell timing advance information in the feedback information transmitted by the candidate secondary node to the master node and/or carries a secondary node identifier.

In the technical solution of this embodiment, the source secondary node transmits the downlink control information to trigger the terminal device to perform early uplink synchronization with the at least one target candidate cell; and by enhancing the existing signaling and/or introducing the new signaling, the candidate secondary node may enable the master node to receive the timing advance information and/or the secondary node identifier and perform forwarding to the source secondary node, to further implement the inter-central unit SCG LTM handover.

### Embodiment 11

Based on any of the foregoing embodiments of the present application, this embodiment further discloses the handover method according to the foregoing embodiments, and specifically discloses a solution for performing an LTM handover.

Optionally, the terminal device performs layer-1 measurement reporting.

Optionally, the terminal device reports a measurement result based on a report configuration and/or reports a measurement result based on the measurement event.

Optionally, when a candidate cell and/or a serving cell satisfies the measurement event, the measurement reporting is triggered.

Optionally, the source secondary node issues a cell switch command (Cell Switch Command) to trigger the terminal device to perform an LTM handover.

Optionally, the terminal device performs an inter-central unit LTM handover and/or an inter-central unit SCG LTM handover according to the cell switch command.

Optionally, the cell switch command carries at least one of the target candidate cell timing advance information, the candidate cell configuration identifier (Candidate configuration index), and the candidate cell random access parameter.

Optionally, the timing advance information belongs to a cell of an inter-central unit secondary node.

Optionally, the cell switch command is transmitted by using a MAC CE (MAC Control Element, MAC control element).

Optionally, the terminal device determines whether a handover is an inter-central unit handover based on the central unit identifier corresponding to the serving cell of the secondary node and the candidate cell central unit identifier.

Optionally, the source secondary node transmits the cell switch notification signaling to notify the master node to perform a secondary cell group handover.

Optionally, the cell switch notification signaling is carried in secondary node-master node cell switch notification signaling.

Optionally, the cell switch notification signaling may be existing signaling, including at least one of the secondary node modification required, the secondary node modification request acknowledgment, the secondary node addition request acknowledgment, the secondary node release request acknowledgment, the radio resource control transfer, and the secondary cell group LTM request acknowledgment.

Optionally, the cell switch notification signaling may alternatively be newly introduced signaling, for example, the secondary node-master node cell switch notification (SN-MN Cell Switch Notification). This is not specifically limited in this embodiment.

Optionally, the cell switch notification signaling carries the information about the candidate secondary node and/or the target secondary node, including at least one of the secondary node identifier, the candidate cell identifier (Candidate Cell Identity), the cell identifier (Cell Identity), the central unit identifier (CU-ID), and the candidate configuration identifier (Candidate Config Identity).

Optionally, the information about the candidate secondary node and/or the target secondary node is used for indicating the master node to forward the first uplink data transmitted by the terminal device to the candidate secondary node, and/or to forward the uplink information transfer multi-radio dual connectivity (UL Information Transfer MRDC) to the candidate secondary node.

Optionally, the multi-radio dual connectivity carries radio resource control reconfiguration complete information.

Optionally, the master node transmits the cell switch notification signaling to the candidate secondary node, to notify the candidate secondary node to perform a secondary cell group handover.

Optionally, the cell switch notification signaling may be existing signaling, including at least one of the secondary node modification required, the secondary node modification request acknowledgment, the secondary node addition request acknowledgment, the secondary node release request acknowledgment, the radio resource control transfer, and the secondary cell group LTM request acknowledgment.

Optionally, the cell switch notification signaling may alternatively be newly introduced signaling, for example, the master node-secondary node cell switch notification (MN-SN Cell Switch Notification). This is not specifically limited in this embodiment.

Optionally, the cell switch notification signaling carries the information about the candidate secondary node and/or the target secondary node, including at least one of the secondary node identifier, the candidate cell identifier (Candidate Cell Identity), the cell identifier (Cell Identity), the central unit identifier (CU-ID), and the candidate configuration identifier (Candidate Config Identity).

Optionally, the information about the candidate secondary node and/or the target secondary node is used for indicating the master node to forward the first uplink data transmitted by the terminal device to the candidate secondary node, and/or to forward the uplink information transfer multi-radio dual connectivity (UL Information Transfer MRDC) to the candidate secondary node.

Optionally, the uplink information transfer multi-radio dual connectivity carries the radio resource control reconfiguration complete information.

Optionally, after the terminal device receives the cell switch command transmitted by the source secondary node, when without the timing advance information of the candidate cell, a random access procedure is performed.

Optionally, the terminal device performs the random access procedure with the target candidate cell based on the random access parameter carried in the cell switch command.

Optionally, the terminal device transmits the cell switch complete information and/or the first uplink data to the master node.

Optionally, the cell switch complete information may be the uplink information transfer multi-radio dual connectivity (UL Information Transfer MRDC) and/or the radio resource control reconfiguration complete signaling.

Optionally, the cell switch complete information is used for indicating that the secondary cell group LTM handover is completed.

Optionally, the uplink information transfer multi-radio dual connectivity signaling further carries at least one of the secondary node identifier, the candidate cell identifier (Candidate Cell Identity), the cell identifier (Cell Identity), the central unit identifier (CU-ID), and the candidate configuration identifier (Candidate Config Identity).

Optionally, in a random access channel-less (RACH-Less) scenario, if the terminal device has performed an early uplink synchronization procedure and transmits the first uplink data and/or the radio resource control reconfiguration complete signaling based on the timing advance information carried in the cell switch command, when new downlink and/or uplink scheduling transmitted by the candidate cell is received, the cell switching is considered completed.

Optionally, if the terminal device receives the cell switch command and performs the random access procedure, the cell switching is considered completed when the random access procedure is successfully completed.

Optionally, after the cell switching is completed, the candidate cell is regarded as a serving cell.

Optionally, the master node forwards the cell switch complete information and/or the first uplink data to the target secondary node.

Optionally, a manner in which the master node selects or determines the target secondary node from the candidate secondary node includes the following.

Manner 1: The master node determines the target secondary node based on information provided by the source secondary node.

Optionally, the master node determines the target secondary node based on the information about the target secondary node provided in the cell switch notification signaling transmitted by the source secondary node, and forwards the uplink data and/or the radio resource control reconfiguration complete signaling transmitted by the terminal device to the target secondary node.

Manner 2: The master node determines the target secondary node based on information provided by the terminal device.

Optionally, the master node determines the target secondary node based on the information about the target secondary node provided in the uplink information transfer multi-radio dual connectivity signaling and/or the radio resource control reconfiguration complete signaling, and forwards the uplink data and/or the radio resource control reconfiguration complete signaling transmitted by the terminal device to the target secondary node.

Optionally, the terminal device transmits the uplink data based on the timing advance information and/or receives new downlink data.

Optionally, the terminal device transmits the uplink data based on the timing advance information.

Optionally, the uplink data is the first uplink data.

Optionally, before the master node initiates the secondary node change request procedure to transmit the secondary node change request signaling to the at least one candidate secondary node, the method further includes: the terminal device reports a measurement report (Measurement Report), and the master node determines, based on the measurement report uploaded by the terminal device, to perform the secondary cell group LTM handover.

Optionally, the measurement report includes: a secondary cell and/or secondary node measurement result.

Optionally, after the terminal device hands over to the target secondary node in the candidate secondary node, continuous LTM handovers to another candidate secondary node may be performed.

Optionally, the another candidate secondary node may be a candidate secondary node other than the target secondary node, or may be the master node in the foregoing embodiments.

In the technical solution of this embodiment, the terminal device actively notifies the master node of the information about the candidate secondary node that performs the secondary cell group LTM handover, to help the master node in determining the target secondary node and forwarding, to the target secondary node, the first uplink data and/or the radio resource control reconfiguration complete information transmitted by the terminal device after the handover is completed, thereby avoiding an LTM handover failure and/or an inability to perform data forwarding due to the master node not knowing the secondary node to which the terminal device is about to hand over, and avoiding a data interaction delay; and/or specifying an inter-central unit secondary node LTM handover procedure and/or an inter-central unit SCG LTM handover procedure, and/or enhancing the existing signaling and/or introducing new interaction signaling to satisfy requirements for an inter-central unit handover.

### Embodiment 12

Refer to FIG. 8. FIG. 8 is a schematic flowchart of a handover method according to embodiment 12. The method according to this embodiment can be applied to a terminal device. The method includes the following step.

S3: performing an LTM handover based on a cell switch command, where the cell switch command is determined by a secondary node based on interaction signaling between a master node and the secondary node.

Optionally, the interaction signaling between the master node and the secondary node includes at least one of secondary node change request signaling, secondary node change request acknowledge signaling, secondary node change required signaling, secondary node change required confirm signaling, and secondary node LTM required confirm signaling.

Optionally, a source secondary node transmits the secondary node change required signaling to the master node.

Optionally, the secondary node change required signaling is used for requesting for the secondary node LTM configuration information.

Optionally, the secondary node change required signaling carries at least one of a random access configuration, a TCI state configuration, a channel state indication configuration, a radio resource control configuration, and a layer-1 measurement event.

Optionally, the master node transmits the secondary node change request signaling to the source secondary node and/or a candidate secondary node.

Optionally, the secondary node change request signaling is transmitted by the master node.

Optionally, the secondary node change request signaling is used for initiating a secondary node change request procedure.

Optionally, the secondary node change request signaling is used for requesting for at least one candidate cell configuration in the target secondary node.

Optionally, the secondary node change request signaling carries at least one of a target candidate cell identifier, a candidate cell LTM configuration identifier, an LTM configuration identifier mapping list, a channel state indication request resource configuration, a central unit identifier indication, a central unit identifier, and a central unit identifier mapping list.

Optionally, the secondary node change request signaling includes at least one of a secondary node addition request, a secondary node modification request, a secondary node release request, and a secondary node LTM request.

Optionally, the candidate secondary node transmits the secondary node change request acknowledge signaling to the master node.

Optionally, the secondary node change request acknowledge signaling includes at least one of a secondary node addition request acknowledgment, a secondary node modification request acknowledgment, a secondary node release request acknowledgment, and a secondary node LTM request acknowledgment.

Optionally, the secondary node change request acknowledge signaling is used for carrying feedback signaling.

Optionally, the secondary node change request acknowledge signaling is used for providing the at least one candidate cell configuration in the target secondary node.

Optionally, the terminal device receives radio resource control reconfiguration signaling transmitted by the master node.

Optionally, the terminal device transmits radio resource control reconfiguration complete signaling to the master node.

Optionally, the master node transmits, based on the radio resource control reconfiguration complete signaling, the secondary node change required confirm signaling and/or secondary node LTM request confirm signaling to the source secondary node.

Optionally, the secondary node change required confirm signaling and/or the secondary node LTM request confirm signaling are/is used for determining the completion of radio resource control reconfiguration.

Optionally, the terminal device performs candidate cell early downlink synchronization based on secondary node LTM configuration information in the radio resource control reconfiguration signaling.

Optionally, the terminal device receives downlink control information transmitted by the source secondary node.

Optionally, the terminal device transmits a random access preamble based on the downlink control information.

Optionally, the random access preamble is used for triggering a target candidate cell to calculate the timing advance information.

Optionally, the source secondary node transmits cell switch notification signaling to the master node.

Optionally, the terminal device receives a cell switch command transmitted by the source secondary node.

Optionally, the cell switch notification signaling is used for notifying the master node to perform a secondary cell group handover.

Optionally, the cell switch notification signaling is carried in secondary node-master node cell switch notification signaling.

Optionally, the terminal device transmits the first uplink data to the master node based on timing advance information carried in the cell switch command.

Optionally, the timing advance information is transmitted by the candidate secondary node to the master node.

Optionally, the timing advance information is forwarded by the master node to the source secondary node.

Optionally, the timing advance information is carried in master node-secondary node timing advance information transfer signaling and/or inter-base station timing advance information transfer signaling.

Optionally, the terminal device transmits the radio resource reconfiguration complete signaling and/or the first uplink data to the master node.

Optionally, the master node transmits the radio resource reconfiguration complete signaling and/or the first uplink data to a target secondary node in the candidate secondary node.

Optionally, the candidate secondary node is an inter-central unit secondary node.

Optionally, the target secondary node is determined based on the cell switch notification signaling and/or the radio resource reconfiguration complete signaling.

In the technical solution of this embodiment, as the terminal device performs the LTM handover based on the cell switch command, and the cell switch command is determined by the secondary node based on the interaction signaling between the master node and the secondary node, an LTM handover mechanism is refined, such that an LTM handover scheme not only supports continuous handovers under an intra-central unit, but also supports an inter-central unit handover, thereby improving the applicability and/or diversity of LTM handovers.

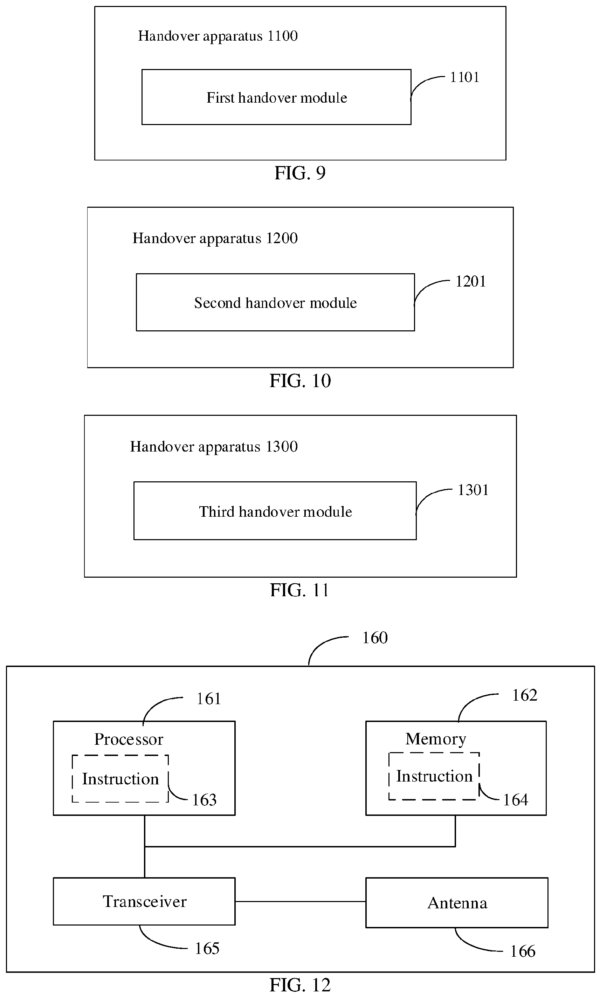

Refer to FIG. 9. FIG. 9 is a first schematic diagram of a structure of a handover apparatus according to an embodiment of the present application. The apparatus may be mounted on or may be the network device (for example, the secondary node) in the foregoing method embodiments. The handover apparatus shown in FIG. 9 may be configured to perform some or all of the functions in the method embodiments described according to the foregoing embodiments. As shown in FIG. 9, the handover apparatus 1100 includes:
a first handover module 1101, configured to perform a secondary node LTM handover based on interaction signaling between a master node and a secondary node.

Optionally, the interaction signaling between the master node and the secondary node includes at least one of secondary node change request signaling, secondary node change request acknowledge signaling, secondary node change required signaling, secondary node change required confirm signaling, and secondary node LTM required confirm signaling.

Optionally, the apparatus further includes at least one of the following:
transmitting the secondary node change required signaling to the master node;
receiving the secondary node change request signaling transmitted by the master node;
transmitting the secondary node change request acknowledge signaling to the master node;
receiving the secondary node change required confirm signaling and/or the secondary node LTM required confirm signaling;
transmitting downlink control information to a terminal device;
receiving timing advance information and/or a secondary node identifier transmitted by the master node;
transmitting cell switch notification signaling to the master node; and
transmitting a cell switch command to the terminal device.

Optionally, the apparatus further includes at least one of the following:
the at least one secondary node includes a source secondary node and/or a candidate secondary node;
the secondary node change required signaling is used for initiating secondary node LTM configuration information;
the secondary node change required signaling carries at least one of a random access configuration, a TCI state configuration, a channel state indication configuration, a radio resource control configuration, and a layer-1 measurement event;
the secondary node change request signaling is used for providing a candidate secondary node LTM configuration;
the secondary node change request signaling carries at least one of a candidate cell identifier, a candidate cell LTM configuration identifier, an LTM configuration identifier mapping list, a channel state indication request resource configuration, a central unit identifier indication, a central unit identifier, and a central unit identifier mapping list;
the secondary node change request signaling includes at least one of a secondary node addition request, a secondary node modification request, a secondary node release request, and a secondary node LTM request;
the secondary node change request acknowledge signaling includes at least one of a secondary node addition request acknowledgment, a secondary node modification request acknowledgment, a secondary node release request acknowledgment, and a secondary node LTM request acknowledgment;
the secondary node change request acknowledge signaling carries updated secondary node LTM configuration information;
the secondary node change required confirm signaling and/or the secondary node LTM required confirm signaling are/is used for determining completion of secondary node LTM configuration;
the downlink control information is used for triggering the terminal device to perform early uplink synchronization with the candidate secondary node;
the timing advance information is carried in master node-secondary node timing advance information transfer signaling and/or inter-base station timing advance information transfer signaling;
the cell switch notification signaling is used for notifying the master node to perform a secondary cell group handover; and
the cell switch notification signaling is carried in secondary node-master node cell switch notification signaling.

Optionally, the apparatus further includes at least one of the following:
the radio resource control configuration includes the central unit identifier and/or a candidate cell configuration;
the secondary node change required signaling and/or secondary node LTM request acknowledge signaling carry/carries the central unit identifier;
the candidate secondary node LTM configuration includes at least one of the random access configuration, the TCI state configuration, the channel state indication configuration, the radio resource control configuration, the layer-1 measurement event, and a channel state indication report configuration;
the updated secondary node LTM configuration information includes at least one of the random access configuration, the TCI state configuration, the channel state indication configuration, the radio resource control configuration, the layer-1 measurement event, and the channel state indication report configuration;
the master node-secondary node timing advance information transfer signaling further carries secondary node identity information;
the candidate secondary node is an inter-central unit secondary node;
the central unit identifier indication is used for requesting for an indication of a central unit identifier corresponding to the candidate secondary node;
the central unit identifier and/or the central unit identifier mapping list are/is used for providing the central unit identifier corresponding to the candidate secondary node; and
the central unit identifier includes a serving cell central unit identifier and/or a candidate cell central unit identifier.

The handover apparatus according to the embodiment of the present application can perform the technical solutions shown in the foregoing method embodiments. The implementation principles and technical effects thereof are similar, and details are not described herein again.

Refer to FIG. 10. FIG. 10 is a second schematic diagram of a structure of a handover apparatus according to an embodiment of the present application. The apparatus may be mounted on or may be the network device (for example, the master node) in the foregoing method embodiments. The handover apparatus shown in FIG. 10 may be configured to perform some or all of the functions in the method embodiments described according to the foregoing embodiments. As shown in FIG. 10, the handover apparatus 1200 includes:
a second handover module 1201, configured to perform a secondary node LTM handover based on interaction signaling between a master node and a secondary node.

Optionally, the interaction signaling between the master node and the secondary node includes at least one of secondary node change request signaling, secondary node change request acknowledge signaling, secondary node change required signaling, secondary node change required confirm signaling, and secondary node LTM required confirm signaling.

Optionally, the apparatus further includes at least one of the following:
receiving the secondary node change required signaling transmitted by a source secondary node;
transmitting the secondary node change request signaling to at least one secondary node;
receiving the secondary node change request acknowledge signaling;
transmitting the secondary node change required confirm signaling and/or secondary node LTM request confirm signaling to the at least one secondary node;
receiving timing advance information and/or a secondary node identifier transmitted by a candidate secondary node;
forwarding the timing advance information and/or the secondary node identifier to the source secondary node;
receiving cell switch notification signaling transmitted by the source secondary node;
receiving radio resource reconfiguration complete signaling and/or first uplink data transmitted by a terminal device; and
forwarding the radio resource reconfiguration complete signaling and/or the first uplink data to a target secondary node in the candidate secondary node.

Optionally, the apparatus further includes at least one of the following:
the at least one secondary node includes a source secondary node and/or a candidate secondary node;
the secondary node change required signaling is used for requesting for the secondary node LTM configuration information;
the secondary node change required signaling carries at least one of a random access configuration, a TCI state configuration, a channel state indication configuration, a radio resource control configuration, and a layer-1 measurement event;
transmitting the secondary node change request signaling to at least one candidate secondary node;
the secondary node change request signaling is used for requesting for a candidate secondary node LTM configuration;
the secondary node change request signaling carries at least one of a candidate cell identifier, a candidate cell LTM configuration identifier, an LTM configuration identifier mapping list, a channel state indication request resource configuration, a central unit identifier indication, a central unit identifier, and a central unit identifier mapping list;
the secondary node change request signaling includes at least one of a secondary node addition request, a secondary node modification request, a secondary node release request, and a secondary node LTM request;
the secondary node change request acknowledge signaling includes at least one of a secondary node addition request acknowledgment, a secondary node modification request acknowledgment, a secondary node release request acknowledgment, and a secondary node LTM request acknowledgment;
the secondary node change request acknowledge signaling is used for providing the candidate secondary node LTM configuration;
the secondary node change required confirm signaling and/or the secondary node LTM required confirm signaling are/is used for determining completion of secondary node LTM configuration;
the timing advance information is carried in master node-secondary node timing advance information transfer signaling and/or inter-base station timing advance information transfer signaling;
the cell switch notification signaling is used for notifying the master node to perform a secondary cell group handover;
the cell switch notification signaling is carried in secondary node-master node cell switch notification signaling; and
completion of the handover is determined by the target secondary node based on the cell switch notification signaling and/or the radio resource reconfiguration complete signaling.

Optionally, the apparatus further includes at least one of the following:
the radio resource control configuration includes the central unit identifier and/or a candidate cell configuration;
the secondary node change required signaling and/or secondary node LTM request acknowledge signaling carry/carries the central unit identifier;
the central unit identifier indication is used for requesting for an indication of a central unit identifier corresponding to the candidate secondary node;
the central unit identifier and/or the central unit identifier mapping list are/is used for providing a secondary node central unit identifier;
the candidate secondary node LTM configuration includes at least one of the random access configuration, the TCI state configuration, the channel state indication configuration, the radio resource control configuration, the layer-1 measurement event, and a channel state indication report configuration;
the central unit identifier includes a serving cell central unit identifier and/or a candidate cell central unit identifier;
the master node-secondary node timing advance information transfer signaling further carries secondary node identity information; and
the candidate secondary node is an inter-central unit secondary node.

Refer to FIG. 11. FIG. 11 is a third schematic diagram of a structure of a handover apparatus according to an embodiment of the present application. The apparatus may be mounted on or may be the terminal device (for example, the mobile phone) in the foregoing method embodiments. The handover apparatus shown in FIG. 11 may be configured to perform some or all of the functions in the method embodiments described according to the foregoing embodiments. As shown in FIG. 11, the handover apparatus 1300 includes:
a third handover module 1301, configured to perform an LTM handover based on a cell switch command, where the cell switch command is determined by a secondary node based on interaction signaling between a master node and the secondary node.

Optionally, the interaction signaling between the master node and the secondary node includes at least one of secondary node change request signaling, secondary node change request acknowledge signaling, secondary node change required signaling, secondary node change required confirm signaling, and secondary node LTM required confirm signaling.

Optionally, performing the LTM handover based on the cell switch command includes at least one of the following:
the secondary node change required signaling is transmitted from a source secondary node to the master node;
the secondary node change request signaling is transmitted from the master node to the source secondary node and/or a candidate secondary node;
the secondary node change request acknowledge signaling is transmitted from the candidate secondary node to the master node;
receiving radio resource control reconfiguration signaling transmitted by the master node;
transmitting radio resource control reconfiguration complete signaling to the master node;
the secondary node change required confirm signaling and/or secondary node LTM request confirm signaling is transmitted from the master node to the source secondary node based on the radio resource control reconfiguration complete signaling;
performing candidate cell early downlink synchronization based on secondary node LTM configuration information in the radio resource control reconfiguration signaling;
receiving downlink control information transmitted by the source secondary node;
transmitting a random access preamble based on the downlink control information;
cell switch notification signaling is transmitted from the source secondary node to the master node;
transmitting first uplink data to the master node based on timing advance information carried in the cell switch command;
transmitting the radio resource reconfiguration complete signaling and/or the first uplink data to the master node; and
the radio resource reconfiguration complete signaling and/or the first uplink data is transmitted from the master node to a target secondary node in the candidate secondary node.

Optionally, the apparatus further includes at least one of the following:
the secondary node change required signaling is used for requesting for the secondary node LTM configuration information;
the secondary node change required signaling carries at least one of a random access configuration, a TCI state configuration, a channel state indication configuration, a radio resource control configuration, and a layer-1 measurement event;
the secondary node change request signaling is transmitted by the master node;
the secondary node change request signaling is used for initiating a secondary node change request procedure;
the secondary node change request signaling is used for requesting for at least one candidate cell configuration in the target secondary node;
the secondary node change request signaling carries at least one of a target candidate cell identifier, a candidate cell LTM configuration identifier, an LTM configuration identifier mapping list, a channel state indication request resource configuration, a central unit identifier indication, a central unit identifier, and a central unit identifier mapping list;
the secondary node change request signaling includes at least one of a secondary node addition request, a secondary node modification request, a secondary node release request, and a secondary node LTM request;
the secondary node change request acknowledge signaling includes at least one of a secondary node addition request acknowledgment, a secondary node modification request acknowledgment, a secondary node release request acknowledgment, and a secondary node LTM request acknowledgment;
the secondary node change request acknowledge signaling is used for carrying feedback signaling;
the secondary node change request acknowledge signaling is used for providing the at least one candidate cell configuration in the target secondary node;
the secondary node change required confirm signaling and/or the secondary node LTM request confirm signaling are/is used for determining completion of radio resource control reconfiguration;
the timing advance information is transmitted by the candidate secondary node to the master node;
the timing advance information is forwarded by the master node to the source secondary node;
the timing advance information is carried in master node-secondary node timing advance information transfer signaling and/or inter-base station timing advance information transfer signaling;
the cell switch notification signaling is used for notifying the master node to perform a secondary cell group handover;
the cell switch notification signaling is carried in secondary node-master node cell switch notification signaling;
the target secondary node is determined based on the cell switch notification signaling and/or the radio resource reconfiguration complete signaling;
the random access preamble is used for triggering a target candidate cell to calculate the timing advance information; and
the candidate secondary node is an inter-central unit secondary node.

Refer to FIG. 12. FIG. 12 is a schematic structural diagram of a communication device according to an embodiment of the present application. As shown in FIG. 12, the communication device 160 according to this embodiment may be the terminal device (or a component usable for the terminal device) or the network device (or a component usable for the network device) mentioned in the foregoing method embodiments. The communication device 160 may be configured to implement the method corresponding to the terminal device or the network device according to the foregoing method embodiments. For details, refer to the descriptions in the foregoing method embodiments.

The communication device 160 may include one or more processors 161, and the processor 161 may also be referred to as a processing unit that can implement a specific control or processing function. The processor 161 may be a general-purpose processor, a dedicated processor, or the like, for example, may be a baseband processor or a central processing unit. The baseband processor may be configured to process communication protocols and communication data, and the central processing unit may be configured to control the communication device, execute a software program, and process data of the software program.

Optionally, the processor 161 may further store instruction(s) 163 or data (for example, intermediate data). Optionally, the instruction(s) 163 may be executed by the processor 161, to enable the communication device 160 to perform the method corresponding to the terminal device or the network device according to the foregoing method embodiments.

Optionally, the communication device 160 may include a circuit, and the circuit can implement a function of transmitting, receiving, or communicating in the foregoing method embodiments.

Optionally, the communication device 160 may include one or more memories 162, on which instruction(s) 164 may be stored, and the instruction(s) may be executed on the processor 161, to enable the communication device 160 to perform the methods according to the foregoing method embodiments.

Optionally, the memory 162 may alternatively store data. The processor 161 and the memory 162 may be provided separately or integrated together.

Optionally, the communication device 160 may further include a transceiver 165 and/or an antenna 166. The processor 161 may be referred to as a processing unit, and controls the communication device 160 (a terminal device, a core network device, or a radio access network device). The transceiver 165 may be referred to as a transceiver unit, a transceiver machine, a transceiver circuit, a transceiver, or the like, and is configured to implement a transceiving function of the communication device 160.

Optionally, if the communication device 160 is configured to implement operations corresponding to the terminal device in the foregoing embodiments, the transceiver 165, for example, may receive a cell configuration; and the processor 161 may perform an LTM handover based on a cell switch command.

Optionally, for a specific implementation process of the processor 161 and the transceiver 165, refer to the related descriptions in the foregoing embodiments. Details are not described herein again.

Optionally, if the communication device 160 is configured to implement operations corresponding to the network device in the foregoing embodiments, the transceiver 165, for example, may transmit a cell switch command, to enable the terminal device to perform an LTM handover based on the cell switch command.

Optionally, for a specific implementation process of the processor 161 and the transceiver 165, refer to the related descriptions in the foregoing embodiments. Details are not described herein again.

The processor 161 and the transceiver 165 described in the present application may be implemented on an IC (Integrated Circuit, integrated circuit), an analog integrated circuit, an RFIC (Radio Frequency Integrated Circuit, radio frequency integrated circuit), a mixed signal integrated circuit, an ASIC (Application Specific Integrated Circuit, application specific integrated circuit), a PCB (Printed Circuit Board, printed circuit board), an electronic device, or the like. The processor 161 and the transceiver 165 may alternatively be manufactured by various integrated circuit process technologies, such as CMOS (Complementary Metal Oxide Semiconductor, complementary metal oxide semiconductor), NMOS (N Metal-Oxide-Semiconductor, N metal-oxide-semiconductor), PMOS (Positive channel Metal Oxide Semiconductor, positive channel metal oxide semiconductor), BJT (Bipolar Junction Transistor, bipolar junction transistor), bipolar CMOS (BiCMOS), silicon germanium (SiGe), gallium arsenide (GaAs), and the like.

In the present application, the communication device may be a terminal device (for example, a mobile phone), or may be a network device (for example, a master node or a secondary node). This needs to be determined based on the context. Further, the terminal device may be implemented in various forms. For example, the terminal device described in the present application may include mobile terminals such as a mobile phone, a tablet computer, a laptop computer, a palmtop computer, a personal digital assistant (Personal Digital Assistant, PDA), a portable media player (Portable Media Player, PMP), a navigation apparatus, a wearable device, a smart bracelet, a pedometer, and the like, as well as fixed terminal devices such as a digital TV, a desktop computer, and the like.

Although in the descriptions of the foregoing embodiments, the communication device is described by using a terminal device or a network device as an example, the scope of the communication device according to the present application is not limited to the foregoing terminal device or network device, and a structure of the communication device is not limited by FIG. 12. The communication device may be an independent device or may be a part of a larger device.

An embodiment of the present application further provides a communication system, including: the terminal device according to any of the foregoing embodiments; and the network device according to any of the foregoing embodiments.

An embodiment of the present application further provides a communication device, including a memory and a processor. The memory stores a handover program, and when the handover program is executed by a processor, the step of the handover method according to any of the foregoing methods is implemented.

The communication device according to the present application may be a terminal device (for example, a mobile phone), or may be a network device (for example, a master node or a secondary node). The specific case needs to be defined based on context.

An embodiment of the present application further provides a storage medium. The storage medium stores a handover program, and when the handover program is executed by a processor, the step of the handover method according to any of the foregoing methods is implemented.

In embodiments of the communication device and the storage medium according to the embodiments of the present application, all technical features in any of the foregoing handover method embodiments may be included, and the description expansion and explanation are basically the same as those in the foregoing method embodiments. Details are not described herein again.

An embodiment of the present application further provides a computer program product. The computer program product includes computer program codes, when the computer program codes are run on a computer, the computer is enabled to perform the methods in various possible implementations described above.

An embodiment of the present application further provides a chip, including a memory and a processor. The memory is configured to store a computer program, and the processor is configured to invoke and run the computer program from the memory, to enable a device with the chip to perform the methods in various possible implementations described above.

It should be understood that the foregoing scenarios are merely examples, and do not constitute a limitation on application scenarios of the technical solutions provided in the embodiments of the present application. The technical solutions of the present application may further be applied to other scenarios. For example, those of ordinary skill in the art will appreciate that, with the evolution of system architectures and the emergence of new service scenarios, the technical solutions provided in the embodiments of the present application are also applicable to similar technical problems.

The serial numbers in the embodiments of the present application described above are merely for description, and do not indicate that the embodiments are good or bad.

The steps of the methods in the embodiments of the present application may be adjusted in terms of an order, combined, or deleted based on actual needs.

The units of the devices in the embodiments of the present application may be combined, divided, or deleted based on actual needs.

In the present application, for the same or similar terminological concepts, technical solutions, and/or application scenario descriptions, a detailed description is usually provided only upon the first occurrence. For the sake of brevity, repeated descriptions are usually not provided upon subsequent occurrences. To understand the technical solutions of the present application and other content, for the same or similar terminological concepts, technical solutions, application scenario descriptions, and/or the like that are not described in detail subsequently, refer to previous related detailed descriptions.

In the present application, descriptions of each embodiment have different focuses. For a part in an embodiment not described or recorded in detail, refer to related descriptions in other embodiments.

The technical features in the technical solutions of the present application may be combined in any manner. For the sake of brevity, not all possible combinations of the technical features in the foregoing embodiments are described. However, as long as there is no contradiction in the combinations of these technical features, all should be considered as falling within the scope of the present application.

Based on the descriptions of the foregoing implementations, those skilled in the art may clearly understand that the methods in the foregoing embodiments may be implemented by software in addition to a necessary universal hardware platform or by hardware only. In most cases, the former is a preferred implementation. Based on such an understanding, the technical solutions of the present application essentially or the part contributing to the prior art may be implemented in a form of a software product. The computer software product is stored on a storage medium as described above (for example, a ROM/RAM, a magnetic disk, or an optical disc) and includes several instructions for enabling a terminal device (may be a mobile phone, a computer, a server, a controlled terminal device, a network device, or the like) to perform the methods according to each embodiment of the present application.

All or some of the foregoing embodiments may be implemented by software, hardware, firmware, or any combination thereof. When implemented by software, all or some of the embodiments may be implemented in a form of a computer program product. The computer program product includes one or more computer instructions. When the computer program instruction(s) are loaded and executed on a computer, processes or functions according to the embodiments of the present application are generated in whole or in part. The computer may be a general-purpose computer, a dedicated computer, a computer network, or another programmable apparatus. The computer instruction(s) may be stored on a storage medium, or transmitted from one storage medium to another storage medium. For example, the computer instruction(s) may be transmitted from one website site, computer, server, or data center to another website site, computer, server, or data center in a wired (for example, coaxial cable, optical fiber, or digital subscriber line) or wireless (for example, infrared, wireless, or microwave) manner. The storage medium may be any available medium that can be accessed by a computer, or an integrated data storage device, for example, a server or data center, that includes one or more available media. The available medium may be a magnetic medium (for example, a floppy disk, a memory disc, or a magnetic tape), an optical medium (for example, a DVD), a semiconductor medium (for example, a solid state disk, Solid State Disk, (SSD)), or the like.

The foregoing descriptions are merely preferred embodiments of the present application, and are not intended to limit the patent scope of the present application. Any equivalent structure or equivalent process transformation made using the content of the descriptions and accompanying drawings of the present application, or any direct or indirect application thereof in other related technical fields shall equally fall within the patent protection scope of the present application.

## Claims

1. A handover method, wherein the handover method is applied to at least one secondary node and comprises:
S2: performing a secondary node LTM handover based on interaction signaling between a master node and the secondary node.

2. The method according to claim 1, wherein the interaction signaling between the master node and the secondary node comprises at least one of secondary node change request signaling, secondary node change request acknowledge signaling, secondary node change required signaling, secondary node change required confirm signaling, and secondary node LTM required confirm signaling.

3. The method according to claim 1, further comprising at least one of the following:
transmitting secondary node change required signaling to the master node;
receiving secondary node change request signaling transmitted by the master node;
transmitting secondary node change request acknowledge signaling to the master node;
receiving the secondary node change required confirm signaling and/or secondary node LTM required confirm signaling;
transmitting downlink control information to a terminal device;
receiving timing advance information and/or a secondary node identifier transmitted by the master node;
transmitting cell switch notification signaling to the master node; and
transmitting a cell switch command to the terminal device.

4. The method according to claim 3, further comprising at least one of the following:
the at least one secondary node comprises a source secondary node and/or a candidate secondary node;
the secondary node change required signaling is used for initiating secondary node LTM configuration information;
the secondary node change required signaling carries at least one of a random access configuration, a TCI state configuration, a channel state indication configuration, a radio resource control configuration, and a layer-1 measurement event;
the secondary node change request signaling is used for providing a candidate secondary node LTM configuration;
the secondary node change request signaling carries at least one of a candidate cell identifier, a candidate cell LTM configuration identifier, an LTM configuration identifier mapping list, a channel state indication request resource configuration, a central unit identifier indication, a central unit identifier, and a central unit identifier mapping list;
the secondary node change request signaling comprises at least one of a secondary node addition request, a secondary node modification request, a secondary node release request, and a secondary node LTM request;
the secondary node change request acknowledge signaling comprises at least one of a secondary node addition request acknowledgment, a secondary node modification request acknowledgment, a secondary node release request acknowledgment, and a secondary node LTM request acknowledgment;
the secondary node change request acknowledge signaling carries updated secondary node LTM configuration information;
the secondary node change required confirm signaling and/or the secondary node LTM required confirm signaling is used for determining completion of secondary node LTM configuration;
the downlink control information is used for triggering the terminal device to perform early uplink synchronization with the candidate secondary node;
the timing advance information is carried in master node-secondary node timing advance information transfer signaling and/or inter-base station timing advance information transfer signaling;
the cell switch notification signaling is used for notifying the master node to perform a secondary cell group handover; and
the cell switch notification signaling is carried in secondary node-master node cell switch notification signaling.

5. The method according to claim 4, further comprising at least one of the following:
the radio resource control configuration comprises the central unit identifier and/or a candidate cell configuration;
the secondary node change required signaling and/or secondary node LTM request acknowledge signaling carries the central unit identifier;
the candidate secondary node LTM configuration comprises at least one of the random access configuration, the TCI state configuration, the channel state indication configuration, the radio resource control configuration, the layer-1 measurement event, and a channel state indication report configuration;
the updated secondary node LTM configuration information comprises at least one of the random access configuration, the TCI state configuration, the channel state indication configuration, the radio resource control configuration, the layer-1 measurement event, and the channel state indication report configuration;
the master node-secondary node timing advance information transfer signaling further carries secondary node identity information;
the candidate secondary node is an inter-central unit secondary node;
the central unit identifier indication is used for requesting for an indication of a central unit identifier corresponding to the candidate secondary node;
the central unit identifier and/or the central unit identifier mapping list is used for providing the central unit identifier corresponding to the candidate secondary node; and
the central unit identifier comprises a serving cell central unit identifier and/or a candidate cell central unit identifier.

6. A handover method, wherein the handover method is applied to a master node and comprises:
S1: performing a secondary node LTM handover based on interaction signaling between the master node and a secondary node.

7. The method according to claim 6, wherein the interaction signaling between the master node and the secondary node comprises at least one of secondary node change request signaling, secondary node change request acknowledge signaling, secondary node change required signaling, secondary node change required confirm signaling, and secondary node LTM required confirm signaling.

8. The method according to claim 6, further comprising at least one of the following:
receiving secondary node change required signaling transmitted by a source secondary node;
transmitting secondary node change request signaling to at least one secondary node;
receiving secondary node change request acknowledge signaling;
transmitting secondary node change required confirm signaling and/or secondary node LTM request confirm signaling to the at least one secondary node;
receiving timing advance information and/or a secondary node identifier transmitted by a candidate secondary node;
forwarding the timing advance information and/or the secondary node identifier to the source secondary node;
receiving cell switch notification signaling transmitted by the source secondary node;
receiving radio resource reconfiguration complete signaling and/or first uplink data transmitted by a terminal device; and
forwarding the radio resource reconfiguration complete signaling and/or the first uplink data to a target secondary node in the candidate secondary node.

9. The method according to claim 8, further comprising at least one of the following:
the at least one secondary node comprises a source secondary node and/or a candidate secondary node;
the secondary node change required signaling is used for requesting for secondary node LTM configuration information;
the secondary node change required signaling carries at least one of a random access configuration, a TCI state configuration, a channel state indication configuration, a radio resource control configuration, and a layer-1 measurement event;
transmitting the secondary node change request signaling to at least one candidate secondary node;
the secondary node change request signaling is used for requesting for a candidate secondary node LTM configuration;
the secondary node change request signaling carries at least one of a candidate cell identifier, a candidate cell LTM configuration identifier, an LTM configuration identifier mapping list, a channel state indication request resource configuration, a central unit identifier indication, a central unit identifier, and a central unit identifier mapping list;
the secondary node change request signaling comprises at least one of a secondary node addition request, a secondary node modification request, a secondary node release request, and a secondary node LTM request;
the secondary node change request acknowledge signaling comprises at least one of a secondary node addition request acknowledgment, a secondary node modification request acknowledgment, a secondary node release request acknowledgment, and a secondary node LTM request acknowledgment;
the secondary node change request acknowledge signaling is used for providing the candidate secondary node LTM configuration;
the secondary node change required confirm signaling and/or the secondary node LTM required confirm signaling is used for determining completion of secondary node LTM configuration;
the timing advance information is carried in master node-secondary node timing advance information transfer signaling and/or inter-base station timing advance information transfer signaling;
the cell switch notification signaling is used for notifying the master node to perform a secondary cell group handover;
the cell switch notification signaling is carried in secondary node-master node cell switch notification signaling; and
completion of the handover is determined by the target secondary node based on the cell switch notification signaling and/or the radio resource reconfiguration complete signaling.

10. The method according to claim 9, further comprising at least one of the following:
the radio resource control configuration comprises the central unit identifier and/or a candidate cell configuration;
the secondary node change required signaling and/or secondary node LTM request acknowledge signaling carries the central unit identifier;
the central unit identifier indication is used for requesting for an indication of a central unit identifier corresponding to the candidate secondary node;
the central unit identifier and/or the central unit identifier mapping list is used for providing a secondary node central unit identifier;
the candidate secondary node LTM configuration comprises at least one of the random access configuration, the TCI state configuration, the channel state indication configuration, the radio resource control configuration, the layer-1 measurement event, and a channel state indication report configuration;
the central unit identifier comprises a serving cell central unit identifier and/or a candidate cell central unit identifier;
the master node-secondary node timing advance information transfer signaling further carries secondary node identity information; and
the candidate secondary node is an inter-central unit secondary node.

11. A handover method, wherein the handover method is applied to a terminal device and comprises:
S3: performing an LTM handover based on a cell switch command, wherein the cell switch command is determined by a secondary node based on interaction signaling between a master node and the secondary node.

12. The method according to claim 11, wherein the interaction signaling between the master node and the secondary node comprises at least one of secondary node change request signaling, secondary node change request acknowledge signaling, secondary node change required signaling, secondary node change required confirm signaling, and secondary node LTM required confirm signaling.

13. The method according to claim 12, wherein step S3 comprises at least one of the following:
the secondary node change required signaling is transmitted from a source secondary node to the master node;
the secondary node change request signaling is transmitted from the master node to the source secondary node and/or a candidate secondary node;
the secondary node change request acknowledge signaling is transmitted from the candidate secondary node to the master node;
receiving radio resource control reconfiguration signaling transmitted by the master node;
transmitting radio resource control reconfiguration complete signaling to the master node;
the secondary node change required confirm signaling and/or secondary node LTM request confirm signaling is transmitted from the master node to the source secondary node based on the radio resource control reconfiguration complete signaling;
performing candidate cell early downlink synchronization based on secondary node LTM configuration information in the radio resource control reconfiguration signaling;
receiving downlink control information transmitted by the source secondary node;
transmitting a random access preamble based on the downlink control information;
cell switch notification signaling is transmitted from the source secondary node to the master node;
transmitting first uplink data to the master node based on timing advance information carried in the cell switch command;
transmitting the radio resource reconfiguration complete signaling and/or the first uplink data to the master node; and
the radio resource reconfiguration complete signaling and/or the first uplink data is transmitted from the master node to a target secondary node in the candidate secondary node.

14. The method according to claim 13, further comprising at least one of the following:
the secondary node change required signaling is used for requesting for the secondary node LTM configuration information;
the secondary node change required signaling carries at least one of a random access configuration, a TCI state configuration, a channel state indication configuration, a radio resource control configuration, and a layer-1 measurement event;
the secondary node change request signaling is transmitted by the master node;
the secondary node change request signaling is used for initiating a secondary node change request procedure;
the secondary node change request signaling is used for requesting for at least one candidate cell configuration in the target secondary node;
the secondary node change request signaling carries at least one of a target candidate cell identifier, a candidate cell LTM configuration identifier, an LTM configuration identifier mapping list, a channel state indication request resource configuration, a central unit identifier indication, a central unit identifier, and a central unit identifier mapping list;
the secondary node change request signaling comprises at least one of a secondary node addition request, a secondary node modification request, a secondary node release request, and a secondary node LTM request;
the secondary node change request acknowledge signaling comprises at least one of a secondary node addition request acknowledgment, a secondary node modification request acknowledgment, a secondary node release request acknowledgment, and a secondary node LTM request acknowledgment;
the secondary node change request acknowledge signaling is used for carrying feedback signaling;
the secondary node change request acknowledge signaling is used for providing the at least one candidate cell configuration in the target secondary node;
the secondary node change required confirm signaling and/or the secondary node LTM request confirm signaling is used for determining completion of radio resource control reconfiguration;
the timing advance information is transmitted by the candidate secondary node to the master node;
the timing advance information is forwarded by the master node to the source secondary node;
the timing advance information is carried in master node-secondary node timing advance information transfer signaling and/or inter-base station timing advance information transfer signaling;
the cell switch notification signaling is used for notifying the master node to perform a secondary cell group handover;
the cell switch notification signaling is carried in secondary node-master node cell switch notification signaling;
the target secondary node is determined based on the cell switch notification signaling and/or the radio resource reconfiguration complete signaling;
the random access preamble is used for triggering a target candidate cell to calculate the timing advance information; and
the candidate secondary node is an inter-central unit secondary node.

15. A communication device, comprising a memory, a processor, and a handover program stored on the memory and executable on the processor, wherein when the handover program is executed by the processor, the step of the handover method according to claim 1, 6, or 11 is implemented.

16. A storage medium, and the storage medium stores a computer program, wherein when the computer program is executed by the processor, the step of the handover method according to claim 1, 6, or 11 is implemented.
